# EUROPEAN PATENT APPLICATION

(11) **EP 2 717 118 A2**
(43) Date of publication of application: **09.04.2014**
(21) Application number: 13186928.1
(22) Date of filing: 01.10.2013
(51) Int. Cl.: G06F 3/01

(54) **Flexible display apparatus and control method thereof**

(30) Priority: 04.10.2012 KR 20120110325
(71) Applicant: Samsung Electronics Co., Ltd, Gyeonggi-do 443-742 (KR)
(72) Inventor: Kwak, Ji-yeon, Seoul (KR); Kang, Kyung-a, Seoul (KR); Kumar, Nipun, Gyeonggi-do (KR); Lee, Yong-yeon, Gyeonggi-do (KR); Lee, Geun-ho, Gyeonggi-do, (KR)
(74) Representative: Gover, Richard Paul

(57) **Abstract**

A flexible display apparatus is provided. The flexible display apparatus includes a display configured to display a screen, a sensor configured to sense bending of the flexible display apparatus, and a controller configured to perform an operation corresponding to a twist bending when in response to the sensed bending being the is twist bending. The twist bending is a bending in which two bending lines are formed in opposing bending directions and meet at a certain side of the display, a controller configured to perform an operation corresponding to the sensed twist bending.

## Description

### CROSS-REFERENCE TO RELATED APPLICATION

This application claims priority from Korean Patent Application No. 10-2012-0110325, filed on October 4, 2012 in the Korean Intellectual Property Office, the disclosure of which is incorporated herein by reference in its entirety.

### BACKGROUND

### 1. Field

Apparatuses and methods consistent with exemplary embodiments relate to a flexible display apparatus and a control method thereof, and more particularly, to a flexible display apparatus which performs an operation corresponding to twist bending, and a control method thereof.

### 2. Description of the Related Art

With the development of electronic technologies, various kinds of display apparatuses have been developed and implemented in various apparatus applications. For example, a variety of display kinds, such as Cathode ray tube display (CRT), Light-emitting diode display (LED), Electroluminescent display (ELD), Electronic paper (E-Ink), Plasma display panel (PDP), Liquid crystal display (LCD), High-Performance Addressing display (HPA), Thin-film transistor display (TFT), and Organic light-emitting diode display (OLED) displays have been developed which have been implements into display apparatuses such as television (TVs), personal computers (PCs), laptops, tablet PCs, mobile phones, and MP3 players which are widely used to such an extent that they can be found in most households.

In order to meet consumer demands for new functions and new forms of displays, an effort to develop new forms of display apparatuses is ongoing. One of the results of this effort is a next generation display apparatus in the form of a flexible display apparatus.

The flexible display apparatus refers to a display apparatus that can be deformed or deformed into different shapes and configuration like paper.

The flexible display apparatus can be deformed by a force that is applied by a user and thus there may be a need for a method for variously using shape deformation characteristics of the flexible display apparatus.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a flexible display apparatus which, when twist bending is sensed, performs an operation corresponding to the sensed twist bending, and a control method thereof.

According to an aspect of an exemplary embodiment, there is provided a flexible display apparatus including: a display configured to display a screen; a sensor configured to sense bending of the flexible display apparatus; and, a controller configured to perform an operation corresponding to a twist bending in response to the sensed bending being the twist bending, wherein the twist bending is a bending in which two bending lines are formed in opposing bending directions and meet at a certain side of the display.

The controller may be configured to control the display to deform the displayed screen into a shape corresponding to the twist bending.

The controller may be configured to control the display to deform a screen displayed on a certain area into a shape corresponding to the twist bending when the certain area of the display is selected by a user manipulation.

The controller may be configured to control the display to deform a solid shape object displayed on the screen to a shape corresponding to the twist bending.

The controller may be configured to control the display to rotate a solid shape object displayed on the screen in a direction corresponding to the twist bending.

The controller may be configured to control the display to change the displayed screen according to a least one of a location of a bending line which may be formed by the twist bending, a direction of the twist bending, an angle of the twist bending, a number of times that the twist bending is performed, and a twist bending holding time.

The controller may be configured to control the display to rotate a solid shape object displayed on the screen in a direction corresponding to normal bending when the sensed bending may be normal bending.

The controller may control the rotating of the solid shape object, based on at least one of a rotation axis corresponding to a bending line of the sensed normal bending, a rotation angle corresponding to a bending angle of the sensed normal bending, a rotation speed corresponding to a bending speed of the sensed normal bending, and a rotation direction corresponding to a bending direction of the sensed normal bending.

The flexible display apparatus may further include: a camera configured to photograph an image; and a communicator configured to receive augmented reality information corresponding to the photographed image. When the controller may be configured to display an augmented reality screen corresponding to the received augmented reality information, and the controller may be configured to control the display to rotate the displayed augmented reality screen in a direction corresponding to the sensed bending.

The controller is configured to control the display to change a color screen to a black and white screen according to the sensed twist bending.

The controller is configured to control the display to open or close a folder icon displayed on the screen according to the sensed twist bending.

The sensor may sense a user grip on the flexible display apparatus, and, wherein the controller may be configured to determine that the twist bending is whole twist bending when the twist bending is performed in a state in which the user grip may be sensed at predetermined areas on opposite sides or at diagonally opposite vertices, and, wherein the controller is configured to determine that the twist bending is partial twist bending when the twist bending may be performed in a state in which the user grip may be sensed at predetermined areas of one side or vertices located on one side.

The controller may be configured to control the display to change a currently displayed application execution screen to another application execution screen when the sensed twist bending is the whole twist bending.

The controller may be configured to perform a function which is provided by a currently displayed application when the sensed twist bending is the partial twist bending.

The flexible display apparatus may further include a communicator, and, when the sensed bending is twist bending, the controller may be configured to control the display to move at least one shared file selected from among shared files displayed on the display to a predetermined area while zooming out from the at least one shared file, may control the communicator to transmit the moved at least one shared file to an external apparatus which may be interlocked with the flexible display apparatus, and may control the display not to display the transmitted at least one shared file when transmitting the at least one shared file is completed.

According to an aspect of another exemplary embodiment, there is provided a method for controlling of a flexible display apparatus which includes a display configured to display a screen, the method including: sensing a bending of the flexible display apparatus; and, performing an operation corresponding to a twist bending in response to the sensed bending being the twist bending, wherein twist bending is a bending in which two bending lines are formed in opposing bending directions and meet a certain side of the display.

The performing the operation may include deforming the displayed screen into a shape corresponding to the sensed twist bending.

The performing the operation may include, when a certain area of the display is selected by a user manipulation, deforming a screen displayed on the selected certain area into a shape corresponding to the twist bending.

The performing the operation may include deforming a solid shape object displayed on the screen to a shape corresponding to the twist bending.

The performing the operation may include rotating a solid shape object displayed on the screen in a direction corresponding to the twist bending.

The performing the operation may include changing the screen according to a least one of a location of a bending line which that may be formed by the twist bending, a direction of the twist bending, an angle of the twist bending, a number of times that the twist bending may be performed, and a twist bending holding time.

The performing the operation may include, rotating a solid shape object displayed on the screen in a direction corresponding to normal bending when the sensed bending is the normal bending.

The rotating the solid shape object may be controlled based on at least one of a rotation axis corresponding to a bending line of the sensed normal bending, a rotation angle corresponding to a bending angle of the sensed normal bending, a rotation speed corresponding to a bending speed of the sensed normal bending, and a rotation direction corresponding to a bending direction of the sensed normal bending.

The method may further include receiving augmented reality information corresponding to a photographed image, and displaying an augmented reality screen corresponding to the received augmented reality information, wherein the performing the operation may include, rotating the displayed augmented reality screen in a direction corresponding to the sensed bending.

The performing the operation may include changing a color screen to a black and white screen according to the sensed twist bending.

The performing the operation may include opening and closing a folder icon displayed on the screen according to the sensed twist bending

The method may further include: sensing a user grip on the flexible display apparatus; determining that the twist bending is whole twist bending when the twist bending is performed and the user grip is sensed at predetermined areas at opposite sides or at diagonally opposite vertices; and determining that the twist bending is partial twist bending when the twist bending is performed and the user grip is sensed at predetermined areas at one side or at vertices located on one side.

The performing the operation may include, changing a currently displayed application execution screen to another application execution screen when the sensed twist bending is the whole twist bending.

The performing the operation may include, performing a function which is provided by a currently displayed application when the sensed twist bending is the partial twist bending.

The method may further include: moving at least one shared file selected from among shared files displayed on the display to a predetermined area while zooming out from the at least one shared file when the sensed bending is the twist bending; transmitting the moved at least one shared file to an external apparatus which may be interlocked with the flexible display apparatus; and controlling to not display the transmitted at least one shared file when transmitting the at least one shared file is completed.

According to the various exemplary embodiments described above, the shape deformation characteristics of the flexible display apparatus may be used as various inputs.

### BRIEF DESCRIPTION OF THE DRAWING FIGURES

The above and/or other aspects will be more apparent by describing in detail exemplary embodiments, with reference to the accompanying drawings, in which:

FIG. 1 is a block diagram illustrating a configuration of a flexible display apparatus according to an exemplary embodiment;

FIG. 2 is a view illustrating a basic configuration of a display of a flexible display apparatus according to an exemplary embodiment;

FIGS. 3A through 5 are views illustrating an example of a method for sensing bending of a flexible display apparatus according to an exemplary embodiment;

FIGS. 6A through 6C are a views illustrating a method for sensing a bending direction using overlapping bend sensors according to an exemplary embodiment;

FIGS. 7A and 7B are views illustrating a method for sensing a bending direction according another exemplary embodiment;

FIG. 8 is a plane view to illustrate a method for correcting a touch parameter according to shape deformation of a flexible display apparatus;

FIGS. 9A through 11B are views illustrating a method for determining a twist bending state according to various exemplary embodiments;

FIGS. 12A and 12B are views illustrating whole twist bending according to an exemplary embodiment;

FIGS. 13A and 13B are views illustrating a partial twist bending according to an exemplary embodiment;

FIGS. 14A and 14B are views illustrating deforming a displayed screen into a shape corresponding to twist bending according to an exemplary embodiment;

FIGS. 15A and15B are views illustrating deforming only a screen which is displayed on a predetermined area selected by a user manipulation into a shape corresponding to twist bending according to an exemplary embodiment;

FIGS. 16A and 16B are views illustrating deforming a solid shape object into a shape corresponding to twist bending according to an exemplary embodiment;

FIGS. 17A through 19B are views illustrating rotating a solid shape object in a direction corresponding to twist bending according to an exemplary embodiment;

FIGS. 20A through 20C are views illustrating rotating a solid shape object according to normal bending according to an exemplary embodiment;

FIGS. 21A and 21B are view illustrating changing a color screen to a black and white screen according to twist bending according to an exemplary embodiment;

FIGS. 22A and 22B are views illustrating controlling opening and closing of a folder icon according twist bending according to an exemplary embodiment;

FIGS. 23A through 23B are views illustrating changing an application execution screen according to whole twist bending according to an exemplary embodiment;

FIG. 24 is a view to illustrate performing a function provided by an application according to partial twist bending according to an exemplary embodiment;

FIG. 25 is a block diagram illustrating a flexible display apparatus according to another exemplary embodiment;

FIGS. 26A through 26C are views illustrating rotating an augmented reality screen according to bending according to an exemplary embodiment;

FIGS. 27A through 27C are views illustrating a method for transmitting at least one selected file according to twist bending according to an exemplary embodiment;

FIGS. 28A and 28B are views illustrating a configuration of a flexible apparatus which is interlocked with an external display apparatus according to still another exemplary embodiment;

FIG. 29 is a view illustrating a configuration of a flexible apparatus which is interlocked with an external display apparatus according to still another exemplary embodiment;

FIGS. 30A and 30B are views illustrating a method for operating a flexible apparatus similar to the flexible apparatus of FIGS. 28 and 29 according to an exemplary embodiment;

FIG. 31 is a flowchart illustrating a control method of a flexible display apparatus according to an exemplary embodiment;

FIG. 32 is a block diagram illustrating a detailed configuration of a flexible display apparatus to explain an operation according to various exemplary embodiments;

FIG. 33 is a block diagram illustrating a detailed configuration of a controller according to various exemplary embodiments;

FIG. 34 is a view illustrating a software structure of a storage for supporting an operation of a controller according to various exemplary embodiments;

FIG. 35 is a view illustrating an example of a flexible display apparatus which is embedded in a body according to an exemplary embodiment;

FIG. 36 is a view illustrating a flexible display apparatus where a power supply is attachable or detachable according to an exemplary embodiment; and

FIGS. 37A and 37B are views illustrating a flexible display apparatus which is implemented according to various exemplary embodiments.

### DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail because they would obscure the exemplary embodiments with unnecessary detail.

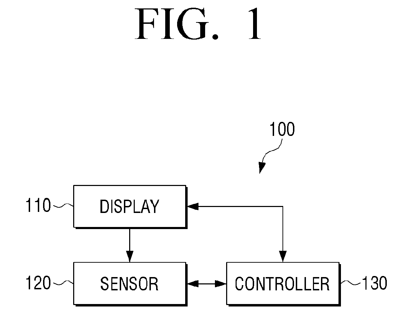

FIG. 1 is a block diagram illustrating a configuration of a flexible display apparatus according to an exemplary embodiment. Referring to FIG. 1, a flexible display apparatus 100 may include all or some of a display 110, a sensor 120, and a controller 130. The flexible display apparatus 100 may be implemented in the form of various kinds of portable apparatuses which are easy to carry and have a display function, such as a mobile phone, a smartphone, a portable multimedia player (PMP), a personal digital assistant (PDA), a tablet PC, and a navigation system, and also may be implemented in the form of stationary apparatuses such as a monitor, a television (TV), and a kiosk.

The display 110 displays various screens. Specifically, the display 110 may display a screen including various objects. The object recited herein may be a variety of objects that are included in an image, a moving image, and text. However, this should not be considered limiting. The object may be all kinds of objects that can be displayed on the display 110 like movie content, photo content, and one or more widgets.

Also, the display 110 may display a content playback screen or an execution screen such as an image, a moving image, text, and music, and may display various user interface (UI) screens. For example, when content may be played back through an application installed in the flexible display apparatus 100, the display 110 may display a content playback screen provided by the corresponding application.

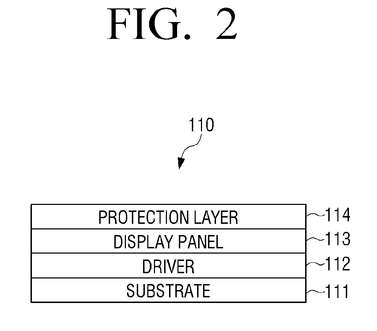

The flexible display apparatus 100, including the display 110, may be bent. Accordingly, the flexible display apparatus 100 and the display 110 have a flexible structure and should be manufactured of a flexible material. Hereinafter, a detailed configuration of the display 110 will be explained with reference to FIG. 2.

FIG. 2 is a view to illustrate a basic configuration of a display which constitutes a flexible display apparatus according to an exemplary embodiment. Referring to FIG. 2, the display 110 may include a substrate 111, a driver 112, a display panel 113, and a protection layer 114.

The flexible display apparatus refers to an apparatus which can be bent, crooked, folded, or rolled like paper, while having and maintaining display characteristics of an existing rigid flat panel display apparatus. Accordingly, the flexible display apparatus should be manufactured on a flexible substrate.

Specifically, the substrate 111 may be implemented using a plastic substrate (for example, a high molecular film) which is deformable by external pressure.

The plastic substrate has a structure which may be formed by performing barrier coating on opposite surfaces of a base film. The base film may be implemented by using various resins such as polyimide (PI), polycarbonate (PC), polyethyleneterephtalate (PET), polyethersulfone (PES), polythylenenaphthalate (PEN), and fiber reinforced plastic (FRP). The barrier coating may be performed on the opposite surfaces of the base film, and an organic membrane or an inorganic membrane may be used for the purpose of maintaining flexibility.

The substrate 111 may be formed of a flexible material besides the plastic substrate such as thin glass or metal foil.

The driver 112 drives the display panel 113. Specifically, the driver 112 may apply a driving voltage to a plurality of pixels constituting the display panel 113 and may be implemented by using a-si, TFT, low temperature poly silicon (LTPS) TFT, or organic TFT (OTFT). The driver 112 may also be implemented in various forms according to the form of the display panel 113. For instance, the display panel 113 may include an organic light emitting substance which consists of a plurality of pixel cells and an electrode layer which covers opposite surface of the organic light emitting substance. In this case, the driver 112 may include a plurality of transistors corresponding to the plurality of pixel cells of the display panel 113. The controller 130 may apply an electric signal to a gate of each transistor and may control the pixel cell connected to the transistor to emit light. Accordingly, an image may be displayed.

Also, besides the organic light emitting diode (OLED), the display panel 113 may be implemented by using electroluminescence (EL), an electrophoretic display (EPD), an electrochromic display (ECD), a liquid crystal display (LCD), an active matrix LCD (AMLCD), or a plasma display panel (PDP). However, the LCD may not emit light by itself and thus may additionally have a separate backlight unit. When the LCD does not use the backlight unit, it may use ambient light. Thus, in order to use the LCD display panel 113 without the backlight unit, an environment, such as a sunny outdoor environment which admits plenty of light, may be used to operate the LCD.

The protection layer 114 protects the display panel 113. The protection layer 114 may be made of ZrO, CeO2, or ThO2. The protection layer 114 may be manufactured as a transparent film and may cover the entire surface of the display panel 113.

According to another exemplary embodiment, the display 110 may be implemented by using electronic paper (e-paper). E-paper is a display which applies general ink characteristics to paper and is different from a general flat panel display in that it uses reflective light. For example, the electronic paper may change a picture or text using electrophoresis, which may use a twist ball or a capsule.

When the display 110 is comprised of elements of a transparent material, the display 110 may be implemented as a display apparatus which may be bendable and transparent. For example, when the substrate 111 is made of a polymer material such as plastic having transparency, the driver 112 may be implemented by a transparent transistor, and the display panel 113 may be implemented by using a transparent organic light emitting substance and a transparent electrode, thereby providing the display 110 with a transparent appearance.

The transparent transistor refers to a transistor which is manufactured by substituting opaque silicon of an existing thin film transistor with a transparent material such as transparent zinc-oxide or titanium oxide. The transparent electrode may be made of advanced materials such as indium tin oxide (ITO) or graphene. Graphene is a material which has a planar structure of a honeycomb shape in which carbon atoms are connected to one another, and has transparency. The transparent organic light emitting layer may be implemented by using various materials.

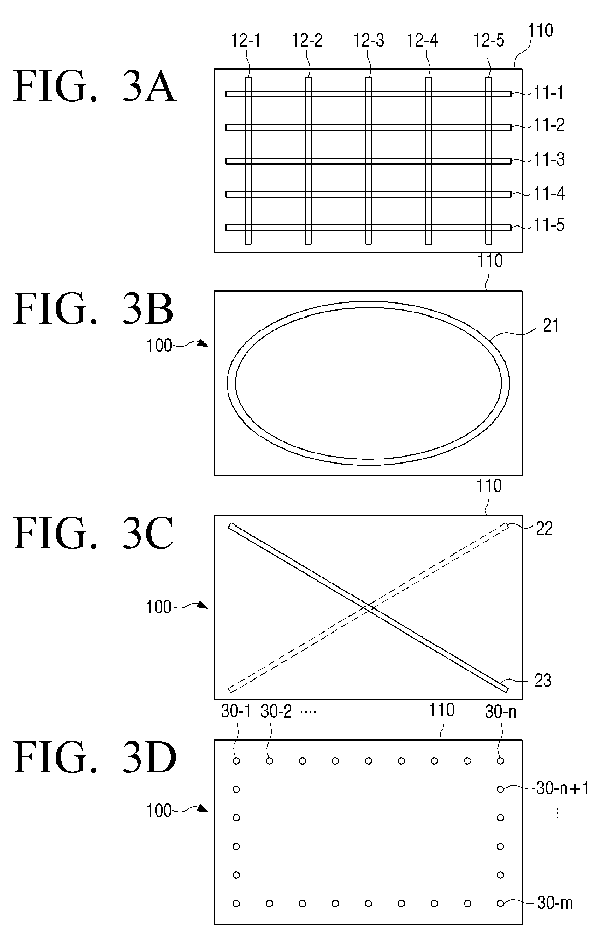

As described above, the display 110 can be bent by an external force and thus has its shape changed. Hereinafter, a method for sensing bending of the flexible display apparatus 100 will be explained with reference to FIGS. 3A to 5.

FIGS. 3A to 5 are views that illustrate examples of a method for sensing bending of the flexible display apparatus according to one or more exemplary embodiments.

The term bending may include normal bending, folding, rolling, and twist bending. The normal bending means a state in which the flexible display apparatus 100 is bent, and differs from the folding and rolling in that bent surfaces do not contact each other.

The folding refers to a state in which the flexible display apparatus 100 is folded. The folding and the normal bending may be distinguished from each other by a degree of bending (e.g., deformation). For example, when bending is performed by less than a predetermined radius of curvature, the bending corresponds to a folding deformation, and, when bending is performed by more than the predetermined radius of curvature, the bending corresponds to normal bending.

The rolling refers to a state in which the flexible display apparatus is rolled. The rolling is also determined based on a radius of curvature. For example, when bending of less than the predetermined radius of curvature is continuously sensed over a predetermined area, the bending corresponds to a rolling deformation. On the other hand, when bending of less than the predetermined radius of curvature may be sensed in an area relatively smaller than that of rolling, the bending corresponds to a folding deformation.

The definitions of the various shape deformation examples described above are exemplary embodiments and shape deformation may be set differently according to the type, size, weight, and characteristic of the flexible display apparatus. For example, when the flexible display apparatus 100 can be bent to such an extent that the surfaces are in contact with each other, the state in which the surfaces of the flexible display apparatus 100 are in contact with each other by bending may correspond to the folding. On the other hand, a state in which a front surface and a rear surface of the flexible display apparatus are in contact with each other by bending may correspond to the rolling.

For the convenience of explanation, various bending shapes described above and other bending shapes may be referred to as bending.

The sensor 120 may sense bending of the display 110. The bending recited herein refers to a state in which the display 110 is bent.

To achieve this, the sensor 120 includes a bend sensor which may be disposed on one surface such as a front surface or a rear surface of the display 110, or a bend sensor which may be disposed on opposite surfaces of the display 110. Further, the sensor 120 may be disposed within the display 110 between any two of the layers that make up the display 110.

The bend sensor recited herein refers to a sensor that can be bent and has a resistance value which varies according to a degree of bending. The bend sensor may be implemented in various forms such as an optical fiber bend sensor, a pressure sensor, and a strain gauge.

FIGS. 3A and 3B are views illustrating arrangements of bend sensors according to one or more exemplary embodiments.

FIG. 3A illustrates an example of a plurality of bar-shaped bend sensors which are arranged in the display 110 in a vertical direction and a horizontal direction such that they form into a grid pattern. Specifically, the bend sensors includes bend sensors 11-1 through 11-5 which are arranged in a first horizontal direction, and bend sensors 12-1 through 12-5 which are arranged in a second vertical direction which may be perpendicular to the first direction. The bend sensors are disposed away from one another by a predetermined distance. The predetermined distances between the bend sensors may be equal from one sensor to the next, or may be variable depending on whether there areas of the display that require higher sensor sensitivity and therefore increased sensor density.

In FIG. 3A, five bend sensors (11-1 to 11-5) are arranged in the horizontal direction and five bend sensors (12-1 to 12-5) are arranged in the vertical direction, forming a grid formation. However, the number of bend sensors may be changed according to a size of the display 110. The bend sensors are arranged in the horizontal direction and the vertical direction to sense bending from the entire area of the display 110. Therefore, when only a part of the flexible display apparatus is flexible or when the flexible display apparatus needs to sense bending from only a part of the apparatus, the bend sensor may be arranged in only a corresponding portion of the apparatus.

The bend sensors may be embedded in a front surface of the display 110 as shown in view FIG. 3A. However, the bend sensors may be embedded in a rear surface of the display 110 or may be embedded in both surfaces.

Also, the shapes, number, and locations of the bend sensors may be variously changed. For example, a single bend sensor or a plurality of bend sensors may be connected with the display 110. The single bend sensor may sense a single bending data and may have a plurality of sensing channels to sense a plurality of bending data.

FIG. 3B illustrates an example of a single bend sensor which may be disposed on one surface of the display 110. As shown in FIG. 3B, a bend sensor 21 may be arranged in the front surface of the display 110 in an elliptical or a circular form. However, the bend sensor may be arranged in the rear surface of the display 110 and may be implemented in a form of a looped curve forming various polygons such as a quadrangle.

FIG. 3C illustrates two bend sensors which intersect. Referring to FIG. 3C, a first bend sensor 22 is disposed on a first surface of the display 110 in a first diagonal direction, and a second bend sensor 23 is disposed on a second surface of the display 110 in a second diagonal direction.

Although line type bend sensors are used in the above-described various exemplary embodiments, the sensor 120 may sense bending using a plurality of strain gages.

FIG. 3D illustrates a plurality of strain gages which are arranged in the display 110. The strain gage may use metal or a semiconductor in which a resistance is greatly changed according to an applied force, and may sense deformation of a surface of an object to be measured according to a change in the resistance value. A material such as metal may experience an increase in resistance value when its length is stretched by an external force, and may experience a decrease in the resistance value when the length is contracted. Accordingly, bending is sensed by sensing a change in the resistance value.

Referring to FIG. 3D, a plurality of strain gages 30-1, 30-2, ..., 30-n, ..., 30-m,...) are arranged along an edge of the display 110. The number of strain gages may be changed according to a size or a shape of the display 110, or sensing of predetermined bending, and a resolution, etc.

Hereinafter, a method for the sensor 120 to sense bending of the display 110 using bend sensors which are arranged in a grid formation or strain gages will be explained.

The bend sensor may be implemented by using an electric resistance sensor which uses an electric resistance, or a micro optical fiber sensor which uses a strain of an optical fiber. Hereinafter, the bend sensor will be explained with the assumption that the bend sensor is the electric resistance sensor for the convenience of explanation.

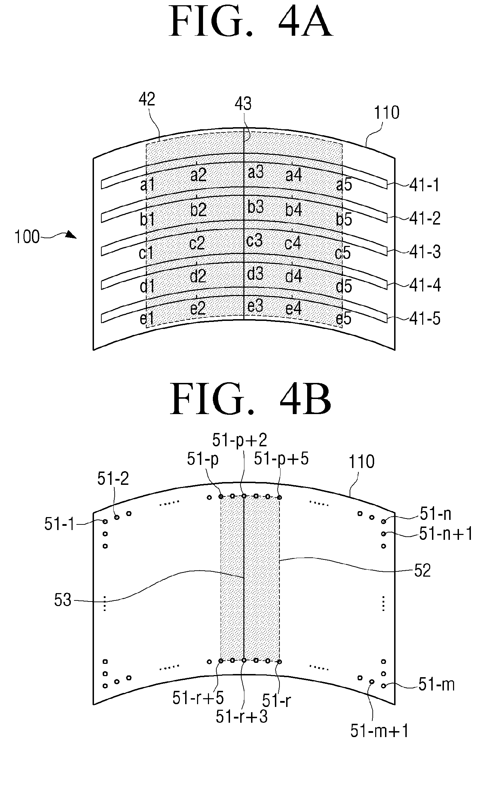

FIGS. 4A through 4B is a view to illustrate a method for sensing bending of the flexible display apparatus according to an exemplary embodiment.

Hereinafter, it is assumed that the surface of the display 110 is placed on a two-dimensional x-y plane for convenience of explanation.

When the display 110 is bent, the bend sensors, which are arranged on one surface or opposite surfaces of the display 110, are also bent and output resistance values corresponding to a magnitude of exerted tension.

That is, the sensor 120 may sense a resistance value of the bend sensor using a level of a voltage applied to the bend sensor or an intensity of a current flowing in the bend sensor, and may sense bending of the display 110 using the sensed resistance value.

When the display 110 is bent so that a bending line may be formed in a vertical direction and a Z+ direction as shown in FIG. 4A, bend sensors 41-1 to 41-5 which are embedded in the front surface of the display 110 are also bent and output resistance values according to a magnitude of exerted tension.

In this case, the magnitude of the tension increases in proportion to a degree of bending. For example, when the display 110 is bent as shown in FIG. 4A, the bending occurring in the center area may be the greatest. Accordingly, the greatest tension is exerted to a point a3 of the bend sensor 41-1, a point b3 of the bend sensor 41-2, a point c3 of the bend sensor 41-3, a point d3 of the bend sensor 41-4, and a point e3 of the bend sensor 41-5, which are the center area, and accordingly, the bend sensors 41-1 to 41-5 have the greatest resistance value at the points a3, b3, c3, d3, and e3.

On the other hand, the degree of bending gradually decreases toward the outside. Accordingly, the bend sensor 41-1 has smaller resistance values as it goes away from the point a3 to the right and left, and has the same resistance value as that before the bending occurs at the point a1 and a left area of the point a1 and at the point a5 and a right area of the point a5 where bending does not occur. The same is applied to the other bend sensors 41-2 to 41-5.

The controller 140 may determine bending of the display 110 based on a result of sensing by the sensor 120. Specifically, the controller 130 may determine a location of a bending area, a size of the bending area, a number of bending areas, a size of a bending line, a location of the bending line, a number of bending lines, a direction of the bending line, and a number of times that bending occurs, based on a relationship between the points where a change in the resistance value of the bend sensor is sensed.

A bending area is an area in which the display 110 is bent. Because the bend sensor is also bent as the flexible display apparatus 100 is bent, all points at which the bend sensors outputs different resistance values from those in the original state may delineate a bending area. On the other hand, an area where there is no change in the resistance value may delineate a flat area in which bending is not performed.

Accordingly, when a distance between the points at which the change in the resistance value is sensed lies within a predetermined distance, the points may be sensed as one bending area. On the other hand, when the distance between the points at which the change in the resistance value is sensed lies beyond the predetermined distance, different bending areas may be delineated with reference to these points.

As described above, in view FIG. 4A, the resistance values from the points a1 to a5 of the bend sensor 41-1, from the points b1 to b5 of the bend sensor 41-2, from the points c1 to c5 of the bend sensor 41-3, from the points d1 to d5 of the bend sensor 41-4, and from the points e1 to e5 of the bend sensor 41-5 are different from the resistance values of the original state. In this case, the points at which the change in the resistance value is sensed in each bend sensor 41-1 to 41-5 are located within a predetermined distance and are continuously arranged.

Accordingly, the controller 130 determines an area 42 which includes all of the points, from the points a1 to a5 of the bend sensor 41-1, from the points b1 to b5 of the bend sensor 41-2, from the points c1 to c5 of the bend sensor 41-3, from the points d1 to d5 of the bend sensor 41-4, and from the points e1 to e5 of the bend sensor 41-5, as one bending area.

The bending area may include a bending line. The bending line refers a line which connects the points at which the greatest resistance value is sensed in each bending area. Accordingly, the controller 130 may determine a line connecting points at which the greatest resistance value is sensed in the bending area as a bending line.

For instance, in the case of view FIG. 4A, a line 43, which connects the point a3 at which the greatest resistance value is output in the bend sensor 41-1, the point b3 at which the greatest resistance value is output in the bend sensor 41-2, the point c3 at which the greatest resistance value is output in the bend sensor 41-3, the point d3 at which the greatest resistance value is output in the bend sensor 41-4, and the point e3 at which the greatest resistance value is output in the bend sensor 41-5, may delineate a bending line. FIG. 4A illustrates the bending line which is formed in the center area of the display surface in the vertical direction.

FIG. 4A illustrates only the bend sensors that are arranged in the horizontal direction from among the bend sensors arranged in the grid formation to explain the case in which the display 110 is bent so that the bending line is formed in the vertical direction. That is, the sensor 120 may sense the display 110 being bent so that a bending line is formed in the horizontal direction through the bend sensors which are arranged in the vertical direction. Also, when the display 110 is bent so that a bending line is formed in a diagonal direction, tension is exerted to all of the bend sensors which are arranged in the horizontal and vertical directions. Therefore, the sensor 120 may sense bending of the display 110 in the diagonal direction based on outputs values of the bend sensors arranged in the horizontal and vertical directions.

Also, the sensor 120 may sense bending of the display 110 using a strain gage.

Specifically, when the display 110 is bent, a force is exerted to strain gages which are arranged along an edge of the display 110, and the strain gages output different resistance values according to the applied force. Accordingly, the controller 130 may determine a location of a bending area, a size of the bending area, a number of bending areas, a size of a bending line, a location of the bending line, a number of bending lines, a direction of the bending line, and a number of times that bending occurs, based on output values of the strain gages.

For example, when the display 110 is bent so that the bending line is formed in the vertical direction as shown in FIG. 4B, a force is exerted to strain gages 51-p,..., 51-p+5, 51-r,..., 51-r+5 that are arranged around a bent area from among a plurality of strain gages embedded in the front surface of the display 110, and the strain gages 51-p,..., 51-p+5, 51-r,..., 51-r+5 output resistance values corresponding to the applied force. Accordingly, the controller 130 may determine an area 51 that includes all points at which the strain gages output resistance values different from those of the original state, as one bending area.

Also, the controller 130 may determine a line connecting at least two strain gages that output resistance values greatly different from those of the original state in the bending area as a bending line. That is, the controller 130 may determine a line connecting at least two strain gages to which the greatest force is exerted, or at least two strain gages to which the greatest force and the next greatest force are exerted as a bending line according to the bending of the display 110, as a bending line.

For example, when the display 110 is bent so that the bending line is formed in the vertical direction as shown in view FIG. 4B, the display 110 may determine a line connecting the first strain gage 51-p+2 and the second strain gage 51-r+3 which output resistance values greatly different from those of the original state as a bending line.

In the above-described exemplary embodiment, the strain gages 51-1, 51-2, ... are embedded in the front surface of the flexible display apparatus 100. The strain gages may be embedded in the rear surface or opposite surfaces of the display 110.

The sensor 120 may sense a degree of bending of the display 110, that is, a bending angle. The bending angle recited herein may refer to an angle which is formed when the display 110 is bent in comparison with a flat state of the display 110.

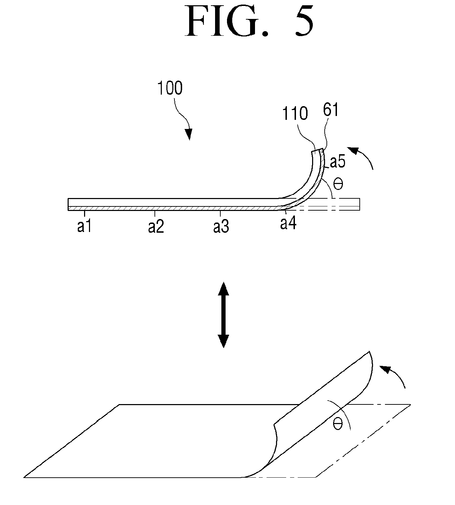

FIG. 5 is a view illustrating a method for determining a bending angle of the display of the flexible display apparatus according to an exemplary embodiment.

The controller 130 may determine a bending angle of the display 110 based on a result of sensing by the sensor 120. To achieve this, the flexible display apparatus 100 may pre-store resistance values which are output from a bending line according to a bending angle of the display 110. Specifically, the controller 130 may determine the bending angle of the display 110 by comparing resistance values which are output from bend sensors or strain gages disposed along the bending line when the display 110 is bent, with the pre-stored resistance values.

For example, when the display 110 is bent as shown in FIG. 5, a bend sensor point a4 located in a bending line outputs the greatest resistance value. At this time, the flexible display apparatus 100 determines a bending angle (θ) that matches the resistance value output from the point a4 using the resistance values which are pre-stored according to the bending angles.

In this case, the controller 130 may perform an appropriate operation according to the bending angle. For example, when the display 110 is bent at a great angle while a channel zapping operation is performed, the controller 130 may increase a channel zapping speed or may extend a channel zapping range. On the other hand, when the bending angle is low, the channel zapping is performed more slowly or within a smaller number of channels. Volume control or content conversion may be performed differently according to the bending angle.

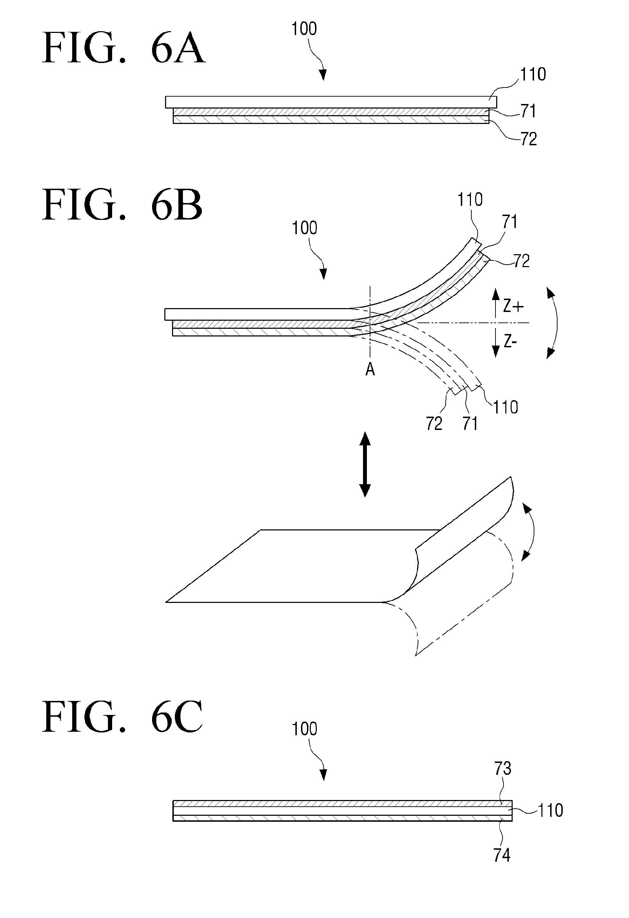

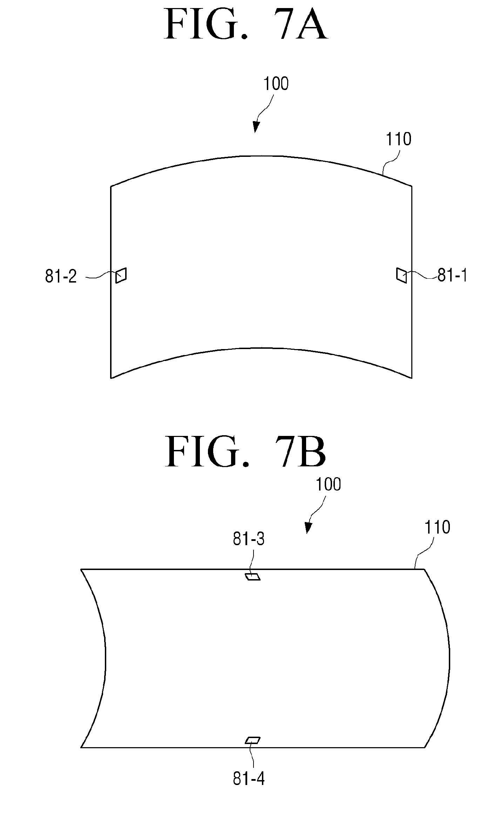

As described above, the bending direction of the flexible display apparatus 100 is divided into the Z+ direction and the Z- direction, and the sensor 120 may sense the bending direction of the flexible display apparatus 100. A detailed description of this will be provided with reference to FIGS. 6 and 7.

FIGS. 6A through 6C are views illustrating a method for sensing a bending direction using overlapping bend sensor according to an exemplary embodiment.

The controller 130 may determine a bending direction of the display 110 based on a result of sensing by the sensor 120. To achieve this, the sensor 120 may include a bend sensor which is disposed in various ways.

For example, the sensor 120 may include two bend sensors 71 and 72 which are disposed overlapping each other on one side of the display 110 as shown in FIG. 6A. In this case, when bending is performed in one direction, different resistance values are output from the upper bend sensor 71 and the lower bend sensor 72 at a point where the bending is performed. Accordingly, the controller 130 may determine a bending direction by comparing the resistance values of the two bend sensors 71 and 72 at the same point.

Specifically, when the display 110 is bent in the Z+ direction as shown in FIG. 6B, tension exerted to the lower bend sensor 72 is greater than that of the upper bend sensor 71 at a point 'A' corresponding to a bending line. On the other hand, when the display 110 is bent in the Z- direction, tension exerted to the upper bend sensor 71 is greater than that of the lower bend sensor 72.

Accordingly, the controller 130 may determine the bending direction by comparing the resistance values of the two bend sensors 71 and 72 at the point A. That is, the controller 130 may determine that the display 110 is bent in the Z+ direction when the resistance value output from the lower bend sensor of the two overlapping bend sensors is greater than the resistance value output from the upper bend sensor at the same point. The controller 130 may determine that the display 110 is bent in the Z- direction when the resistance value output from the upper bend sensor of the two overlapping bend sensors is greater than the resistance value output from the lower bend sensor at the same point.

Although the two bend sensors are disposed overlapping each other on one side of the display 110 in FIGS. 6A and 6B, the sensor 120 may include bend sensors which are disposed on opposite surfaces of the display 110 as shown in FIG. 6C.

FIG. 6C illustrates two bend sensors 73 and 74 which are disposed on the opposite surfaces of the display 110.

Accordingly, when the display 110 is bent in the Z+ direction, the bend sensor which is disposed on a first surface of the opposite surfaces of the display 110 is subject to a compressive force, whereas the bend sensor which is disposed on a second surface is subject to tension. On the other hand, when the display 110 is bent in the Z- direction, the bend sensor disposed on the second surface is subject to a compressive force, whereas the bend sensor disposed on the first surface is subject to tension. As described above, the different values are detected from the two bend sensors according to the bending direction and the controller 130 determines the bending direction according to a detection characteristic of the value.

Although the bending direction is sensed using the two bend sensors in FIGS. 6A to 6C, the bending direction may be determined by means of a strain gage disposed on one surface or opposite surfaces of the display 110.

FIGS. 7A through 7B are views illustrating a method for sensing a bending direction according to another exemplary embodiment. Specifically, FIGS. 7A and 7B are views that illustrate a method for sensing a bending direction using an acceleration sensor for example.

The sensor 120 may include a plurality of acceleration sensors which are disposed on edge areas of the display 110. The controller 130 may determine a bending direction of the display 110 based on a result of sensing by the sensor 120.

The acceleration sensor is a sensor that measures acceleration of a motion and a direction of the acceleration. Specifically, the acceleration sensor outputs a sensing value corresponding to acceleration of gravity which changes according to a slope of an apparatus where that sensor is attached.

Accordingly, when the acceleration sensors 81-1 and 81-2 are disposed on opposite edges of the display 110 as shown in FIG. 7A, output values sensed by the acceleration sensors 81-1 and 81-2 are changed when the display 110 is bent. The controller 130 calculates a pitch angle and a roll angle using the output values sensed by the acceleration sensors 81-1 and 81-2. Accordingly, the controller 130 may determine a bending direction based on changes in the pitch angle and the roll angle sensed by the acceleration sensors 81-1 and 81-2.

In FIG. 7A, the acceleration sensors 71-1 and 71-2 are disposed on opposite edges in the horizontal direction with reference to the front surface of the display 110. However, the acceleration sensors may be disposed in the vertical direction as shown in FIG. 7B. In this case, when the display 110 is bent in the vertical direction, the controller 130 may determine a bending direction according to measurement values sensed by the acceleration sensors 81-3 and 81-4 in the vertical direction.

In FIGS. 7A and 7B, the acceleration sensors are disposed on the left and right edges and/or the upper and lower edges of the display 110. Further, the acceleration sensors may be disposed along the left, right, upper and lower edges and/or may be disposed at or near the corners.

Besides the acceleration sensor described above, the bending direction may be sensed using a gyro sensor or a geomagnetic sensor. The gyro sensor refers to a sensor which, when a rotational motion occurs, detects an angular velocity by measuring Coriolis' force exerted in a velocity direction of the motion. Based on a measurement value of the gyro sensor, a direction of the rotational motion can be sensed and thus a bending direction can also be sensed. The geomagnetic sensor refers to a sensor which senses azimuth using a 2-axis or 3-axis fluxgate. When such a geomagnetic sensor is applied, the geomagnetic sensor disposed on each edge of the flexible display apparatus 100 suffers from location movement when the edge is bent, and outputs an electric signal corresponding to a change in geomagnetism caused by the location movement. The flexible display apparatus may calculate a yaw angle using the value output from the geomagnetic sensor. According to a change in the calculated yaw angle, various bending characteristics such as a bending area and a bending direction can be determined.

As described above, the controller 130 may determine bending of the display 110 based on the result of sensing by the sensor 120. The configurations of the sensors and the sensing methods described above may be applied to the flexible display apparatus 100 individually or may be applied in combination.

In the above-described exemplary embodiment, the display 110 is bent. However, because the display 110 is bent along with the flexible display apparatus 100, sensing bending of the display 110 may be regarded as sensing bending of the flexible display apparatus 100. That is, the configuration to sense bending may be provided in the flexible display apparatus 100, and the controller 130 may determine bending of the flexible display apparatus 100 based on a result of sensing.

The sensor 120 may sense a user's touch manipulation on a screen of the display 110. In this case, the sensor 120 may include a resistive or capacitive touch sensor, and the controller 130 may determine coordinates of a point of the display 110 where the user touches based on an electric signal transmitted from the sensor 120.

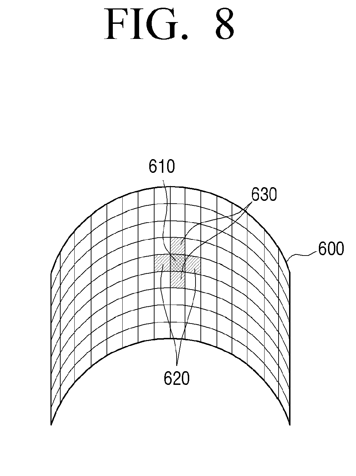

However, when the shape of the display 110 is deformed, touch sensitivity or a touch location in the deformed area may be different from that before the shape is deformed. In this case, when the shape of the display 110 is deformed, the controller 130 may correct a touch parameter according to the deformed shape. That is, when shape deformation of the display 110 is sensed through the sensor 120, the controller 130 may determine a shape deformation area, a bending direction, a bending angle, and etc., and may correct the touch parameter in the deformed area using the bending direction, the bending angle, and etc. The touch parameter recited herein may include a parameter indicating a touch location and a parameter regarding pressure at a touch point. This may vary according to a touch recognizing method. This will be explained in detail below with reference to FIG. 8.

FIG. 8 is a plane view illustrating a method for correcting a touch parameter according to shape deformation of the flexible display apparatus. Referring to FIG. 8, the flexible display apparatus 100 may include a touch screen panel 600, a touch location 610 to be touched, and surrounding areas 620 and 630 of the touch location 610. The touch screen panel 600 may be disposed in the display 110 or on a top of the display 110.

When the flexible display apparatus 100 is bent so that a bending line is formed in a vertical direction and in a Z+ direction, the touch screen panel 600 may have a shape as shown in FIG. 8. In this case, left and right surrounding areas 620 get closer to each other with reference to the bending area and touch sensitivity increases. On the other hand, upper and lower surrounding areas 630 are less deformed and thus there is little change in the touch sensitivity. Accordingly, the controller 130 may correct the touch parameter so that the touch sensitivity of the left and right surrounding areas 620 is reduced. Also, when the shape of the flexible display apparatus 100 is deformed as shown in FIG. 8, a location of a touch which is input to the deformed area is different from that before the shape is deformed. Therefore, the controller 130 may correct the touch parameter. That is, the controller 130 may increase or reduce the touch sensitivity according to the deformed shape of the flexible display apparatus 100, or may correct the touch location to be touched. The increasing the touch sensitivity may refer to shortening a generation period of a signal corresponding to a touch event or etc.

Also, the sensor 120 may sense a user manipulation of twist bending the flexible display apparatus 100.

The twist bending refers to bending which is formed by a user manipulation of gripping predetermined areas on at least one side or vertex of the flexible display apparatus 100, and bending a first grip area in the Z+ direction and bending a second grip area in the Z-direction. However, because of the characteristics of twisting of the flexible display apparatus 100, at least one of the sides that meet a + bending line which is generated by the bending in the Z+ direction may be the same as at least one of the sides that meet a - bending line which is generated by the bending in the Z- direction.

Also, the griping herein is not limited to griping with one of the user's bodies that can grip, for example, hand or foot. Therefore, the gripping may include attaching the flexible display apparatus 100 to an external object (a wall or a TV) or fixing the flexible display apparatus 100. In this case, the twist bending may be performed by bending an area other than an attached or fixed area.

Such a twist bending may include whole twist bending and partial twist bending. The whole twist bending refers to bending that is formed by a user manipulation of gripping predetermined areas on opposite sides or diagonally opposite vertices of the flexible display apparatus 100, and bending a first grip area in the Z+ direction and bending a second grip area in the Z- direction.

The partial twist bending refers to bending that is formed by a user manipulation of gripping predetermined areas on one side of the flexible display apparatus 100 or vertices located on one side, and bending a first grip area in the Z+ direction and bending a second grip area in the Z- direction.

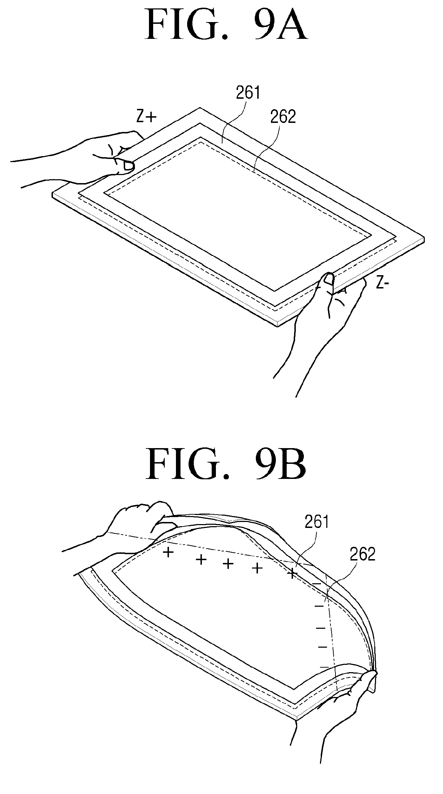

A method for determining a twist bending state with reference to the above-described definitions of the twist bending will be explained with reference to FIGS. 9A to 13B. However, for the sake of easy explanation of the method for determining the twist bending state according to various exemplary embodiments, a bending line that is formed by the user's bending in the Z+ direction is referred as '+', and a bending line that is formed by the user's bending in the Z- direction is referred to as '-'.

FIGS. 9A and 9B are views illustrating a method for determining a twist bending state using a pressure sensor. Referring to FIGS. 9A and 9B, the sensor 120 may include a pressure sensor 261 which is disposed in a front surface of the display 110, and a pressure sensor 262 which is disposed in a rear surface of the display 110. The sensor 120 may sense a magnitude of pressure exerted to the pressure sensor and provide the magnitude of pressure to the controller 130. In this case, the controller 130 may sense a user's grip and a user's manipulation of twist bending using values sensed by the pressure sensors 261 and 262 of the sensor 120. The pressure sensors 261 and 262 may be implemented by using a piezo film which outputs an electric signal corresponding to a magnitude of pressure.

When the user grips predetermined areas of a left side and a right side of the flexible display apparatus as shown in FIG. 9A, and bends a grip area of the left side in the Z+ direction, the pressure sensors 261 and 262 disposed in the left side may sense a magnitude of pressure corresponding to an applied force and provide the magnitude of pressure to the controller 130. In this case, the controller 130 may determine that the left side is bent in the Z+ direction using a value which is sensed by the pressure sensor 261 disposed in the front surface of the left side and a value which is sensed by the pressure sensor 262 disposed in the rear surface.

Also, when the user bends a grip area of the right side in the Z- direction, the pressure sensors 261 and 262 disposed in the right side may sense a magnitude of pressure corresponding to an applied force and provide the magnitude of pressure to the controller 130. In this case, the controller 130 may determine that the right side is bent in the Z- direction using a value which is sensed by the pressure sensor 261 disposed in the front surface of the right side and a value which is sensed by the pressure sensor 262 disposed in the rear surface.

In this case, the controller 130 recognizes that predetermined areas of the opposite sides of the flexible display apparatus 100 are gripped, and the first grip area is bent in the Z+ direction and the second grip area is bent in the Z- direction, and determines that the flexible display apparatus 100 is twist-bent.

The flexible display apparatus 100 may be deformed into a shape shown in view (b) of FIG. 9 by the user's twist bending.

Although the pressure sensors are disposed in the front surface and the rear surface of the display 110 in FIGS. 9A and 9B, the pressure sensors may be disposed only in the one surface of the display 110. Also, the shape, number, and location of the pressure sensors may be changed. According to an exemplary embodiment, the pressure sensors may be disposed in a diagonal direction.

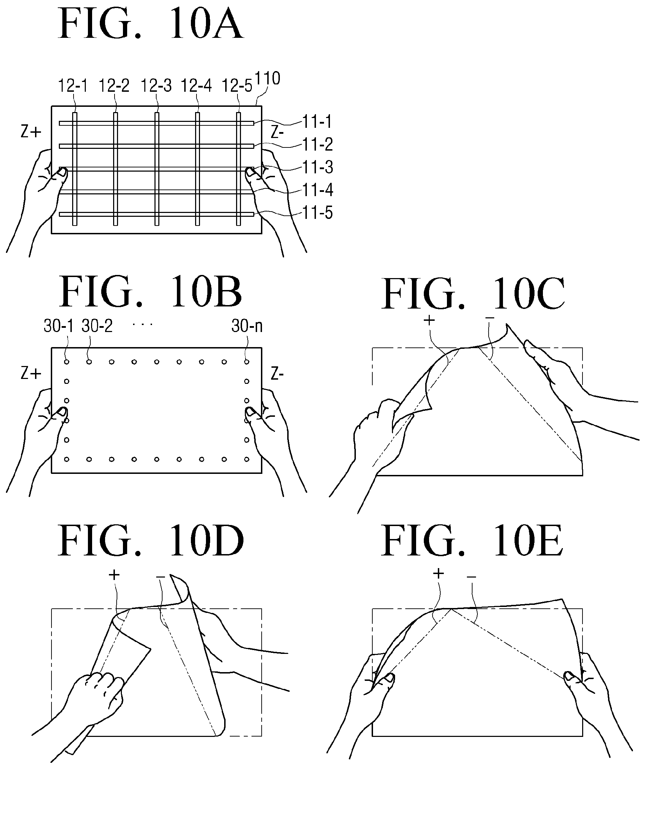

FIGS. 10A through 10E are views illustrating a method for determining a twist bending state according to another exemplary embodiment. Referring to FIGS. 10A through 10E, it may be determined that the flexible display apparatus 100 is or is not twist-bent by using a bending line which is sensed by one or more bend sensors and/or a strain gage without the use of a separate pressure sensor.

As shown in FIG. 10A, a plurality of bar-shaped bend sensors may be arranged in the display 110 in a horizontal direction and a vertical direction. Also, as shown in FIG. 10B, a plurality of strain gages may be arranged in the display 110.

When the user grips predetermined areas of the left side and the right side of the flexible display apparatus 100 as shown in FIGS. 10A and 10B, and bends the grip area of the left side in the Z+ direction, a + bending line may be formed as shown in FIG. 10C.

Also, when the user grips the predetermined areas of the left side and the right side of the flexible display apparatus 100, and bends the grip area of the right side in the Z-direction, a - bending line may be formed as shown in FIG. 10C.

In this case, the sensor 120 may sense the formed + and - bending lines. Also, the sensor 120 may sense the bending directions of the + and - bending lines.

When at least one of the sides that meet the sensed + bending line is the same as at least one of the sides that meet the sensed - bending line, and the bending directions of the + and - bending lines are opposite to each other, the controller 130 may determine that the flexible display apparatus 100 is twist-bent.

FIGS. 10A and 10B are just for convenience of explanation, and various bend sensors and strain gages may be arranged in various ways as shown in FIG. 3.

The shape of the flexible display apparatus 100 may be deformed by the user's twist bending as shown in FIG. 10C. However, the shape of the flexible display apparatus 100 may be deformed as shown in FIGS. 10D and 10E according to a force that is used in performing the twist bending and/or a location of the user's grip.

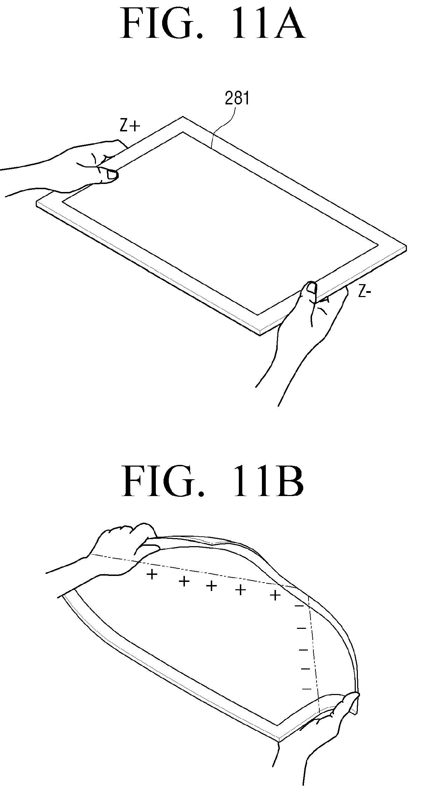

FIGS. 11A and 11B are views illustrating a method for determining a twist bending state according to still another exemplary embodiment. Referring to FIGS. 11A and 11B, the sensor 120 may include a shape recognition sensor 281 which is disposed in one surface of the display 110. When the shape of the flexible display apparatus 100 is deformed, the shape recognition sensor 281 may output a voltage value corresponding to the deformed shape. Specifically, the shape recognition sensor 281 is divided into a plurality of coordinates. Then, when the shape of the flexible display apparatus 100 is deformed, the shape recognition sensor 281 may have each coordinate output a voltage value corresponding to the deformed shape. In this case, the controller 130 may recognize a location of a bending area, a location of a bending line, a bending direction, a bending angle, a bending speed, a number of times that bending is performed using the output voltage value. Also, the controller 130 may recognize the deformed shape by using the location of the bending area, the location of the bending line, the bending direction, and the bending angle. For example, the controller 130 may distinguish normal bending, twist bending, folding and rolling from one another using the location of the bending area, the location of the bending line, the bending direction, and the bending angle.

When the user grips predetermined areas of the left side and the right side of the flexible display apparatus 100 as shown in FIG. 11A, and the grip area of the left side is bent in the Z+ direction, a + bending line is formed as shown in FIG. 11B. Also, when the grip area of the right side is bent in the Z- direction, a - bending line is formed as shown in FIG. 11B.

In this case, the shape recognition sensor 281 may have each coordinate output a voltage value corresponding to the shape. Accordingly, the controller 130 may recognize what shape the deformed shape is using according to the output voltage value. In particular, when at least one of the sides that meet the + bending line is the same as at least one of the sides that meet the - bending line, and the bending directions of the + and - bending lines are opposite to each other, the controller 130 may determine that the flexible display apparatus 100 is twist-bent.

The flexible display apparatus 100 may be deformed into the shape as shown in FIG. 11B by the user's twist bending.

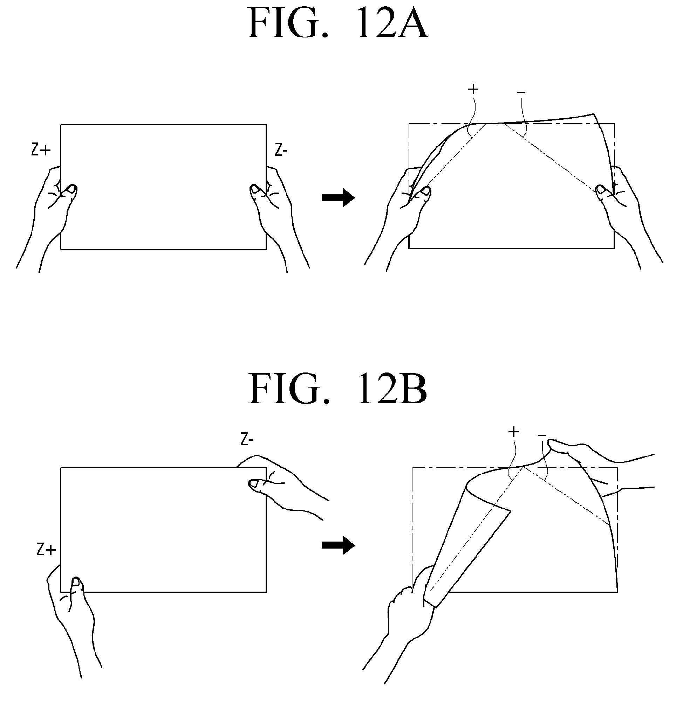

FIGS. 12A and 12B are views illustrating whole twist bending according to an exemplary embodiment. The whole twist bending refers to bending that is formed by a user manipulation of gripping predetermined areas on opposite sides, or at diagonally opposite vertices, of the flexible display apparatus 100, and bending a first grip area in the Z+ direction and bending a second grip area in the Z- direction.

That is, the whole twist bending may be a user manipulation of gripping predetermined areas of the left side and the right side which are opposite to each other and bending them in the opposing directions, as shown in FIG. 12A. Also, according to an exemplary embodiment, the whole twist bending may be a user manipulation of gripping predetermined areas of the diagonally opposite vertices and bending them in the opposing directions, as shown in FIG. 12B.

The flexible display apparatus 100 may be deformed by the user's whole twist bending as shown in FIGS. 12A and 12B.

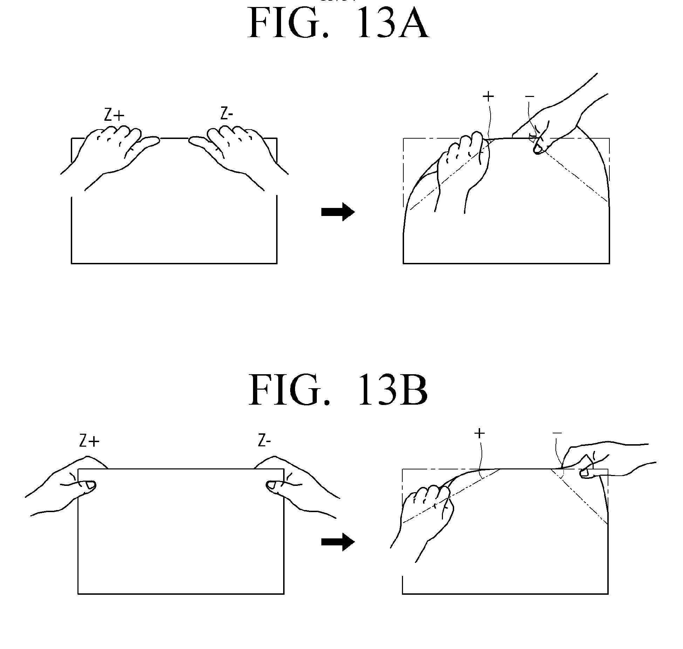

FIGS. 13A and 13B are views illustrating partial twist bending. The partial twist bending refers to bending that is formed by a user manipulation of gripping predetermined areas of one side or vertices of one side of the flexible display apparatus 100, and bending a first grip area in the Z+ direction and bending a second grip area in the Z-direction.

That is, the partial twist bending may be a user manipulation of gripping predetermined areas of one side (left side, right side, upper side, or lower side) and bending them in the opposing directions, as shown in FIG. 13A. Also, according to an exemplary embodiment, the partial twist bending may be a user manipulation of gripping predetermined areas of vertices formed on one side and bending them in the opposing directions, as shown in FIG. 13B.

The flexible display apparatus 100 may be deformed by the user's partial twist bending as shown in FIGS. 13A and 13B.

The controller 130 may determine whether the flexible display apparatus 100 is in a whole twist bending state or a partial twist bending state, using the determining method of FIGS. 9A to 11B and a user's grip location. That is, when the sensed user's grip is located on the predetermined areas of the opposite sides or diagonally opposite vertices, the controller 130 determines that the flexible display apparatus 100 is in the whole twist bending state. Also, when the sensed user's grip is located on the predetermined areas of one side or vertices formed on one side, the controller 130 determines that the flexible display apparatus 100 is in the partial twist bending state.

Hereinafter, the detailed configuration of the display 110 and the bending sensing method thereof according to various exemplary embodiments will be explained in detail.

The controller 130 controls an overall operation of the flexible display apparatus 100. Specifically, the controller 130 controls all or some of the display 110 and the sensor.

In particular, the controller 130 may set an item which is located on a bending line to be in a movable state. The item may be a variety of objects which are displayed on the display 110. For example, the item may be an application icon, a content icon, a folder icon including at least one file, or etc. That is, when the user bends the flexible display apparatus 100 and places a specific item on a bending line, the controller 130 may set the item which is placed on the bending line to be a movable state and accordingly the user may easily move the set item in a direction that the user wants.

Also, the controller 130 may control the display 110 to change a displayed content in proportion to a bending speed. The content may be movie content, music content, photo content, e-book content, etc. That is, when the user bends the flexible display apparatus 100 at a first bending speed, the controller 130 controls the display 110 to change the content at a speed corresponding to the first speed, and, when the user bends the flexible display apparatus 100 at a second bending speed which is faster than the first bending speed, the controller 130 controls the display 110 to change the content at a speed corresponding to the second speed. For example, movie content changed at the first bending speed and a movie content changed at the second bending speed may be different from each other. Also, an album, a title, or an artist of a music content changed at the first bending speed and an album, a title, or an artist of a music content changed at the second bending speed may be different from each other. Also, photo content changed at the first bending speed and a photo content changed at the second bending speed may be different from each other. Also, a page of an e-book content turned over at the first bending speed and a page of an e-book turned over at the second bending speed may be different from each other.

The controller 130 may control to perform a function corresponding to bending sensed by the sensor 120 when a bending angle is greater than or equal to a predetermined angle. Also, when the bending angle is less than the predetermined angle, the controller 130 may control not to perform a function corresponding to bending sensed by the sensor 120. For example, when content is displayed on the display 110 and a bending angle of bending sensed by the sensor is greater than or equal to the predetermined angle, the controller 130 may control to zoom in the displayed content as the bending angle increases.

Also, the controller 130 may control to perform a different operation according to a bending direction. For example, a photo application is executed and a photo is displayed. In this state, when a bending direction sensed by the sensor 120 is the Z+ direction, the controller 130 may control to display a next photo of the currently displayed photo. To the contrary, when a bending direction sensed by the sensor 120 is the Z- direction, the controller 130 may control to display a previous photo of the currently display photo.

Also, the controller 130 may control a display state of content according to a number of times that bending is performed. For example, a movie playback application is executed and movie content is played back. In this state, when the number of times that bending is performed is one within a predetermined time, the controller 130 may control to play back the current movie content at 2x speed. When the number of times that bending is performed is two within the predetermined time, the controller 130 may control to play back the current movie content at 4x speed. When the number of times that bending is performed is three within the predetermined time, the controller 130 may control to play back the current movie content at 8x speed.

When twist bending is sensed by the sensor 120, the controller 130 may perform an operation corresponding to the sensed twist bending.

Specifically, the controller 130 may deform a displayed screen into a shape corresponding to the sensed twist bending. The displayed screen may be various screens such as a home screen including a plurality of application icons, an application execution screen, a screen including a plurality of contents, a still image screen, and a moving image screen. The twist bending may be whole twist bending or partial twist bending.

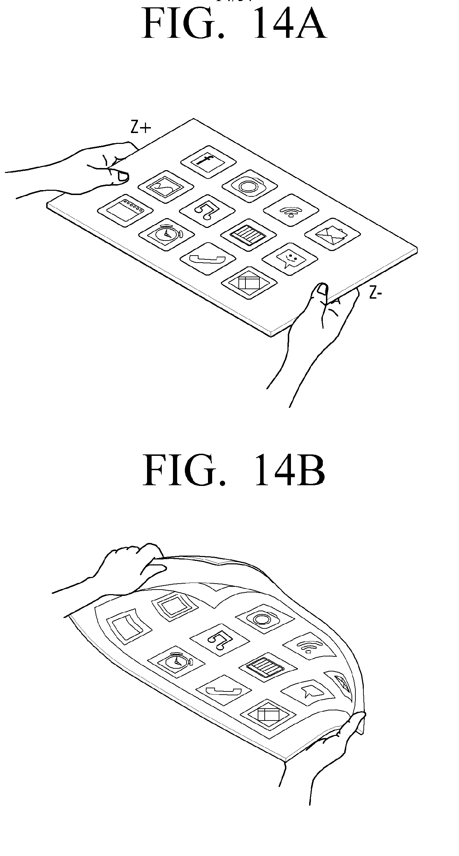

This will be explained in detail with reference to FIGS. 14A and 14B.

FIGS. 14A and 14B are views illustrating deforming a displayed screen into a shape corresponding to twist bending. For the convenience of explanation, it is assumed that the displayed screen is a screen that includes a plurality of application icons and the twist bending is whole twist bending. As shown in FIG. 14A, the display 110 may display a screen including a plurality of application icons. In this case, when the user twist-bends the flexible display apparatus 100, the displayed screen may be deformed into a shape corresponding to the twist bending as shown in FIG. 14B.

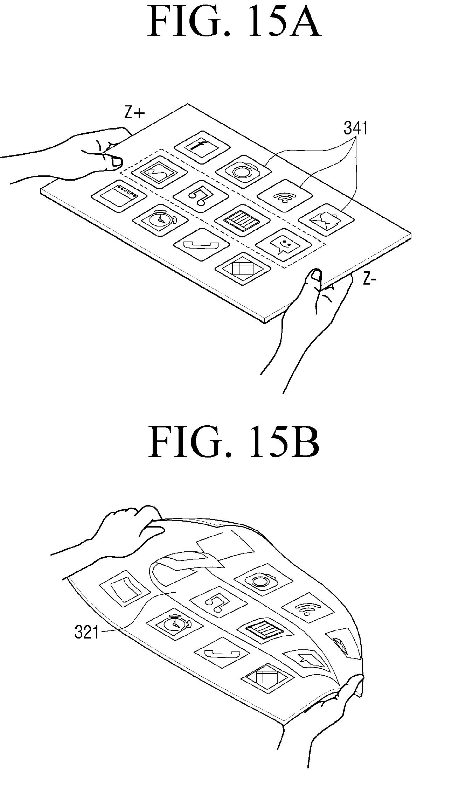

When a certain area of the display 110 is selected by a user manipulation, the controller 130 may deform a screen displayed on the selected certain area into a shape corresponding to twist bending. The user manipulation recited herein may be a touch manipulation. In this case, the display 110 may display a UI window to select an area to be deformed into the shape corresponding to the twist bending. The screen on the certain area may include various objects such as content, an application icon, and a widget. This will be explained in detail with reference to FIG. 15.

FIGS. 15A through 15B are views illustrating deforming only on a certain area selected by a user manipulation of a screen which is displayed into a shape corresponding to twist bending. For the convenience of explanation, it is assumed that an application icon object is included in the certain area and twist bending is whole twist bending. As shown in FIG. 15A, the display 110 may display a screen including a plurality of application icons. In this case, an area including objects 341 displayed in the second row may be selected by a user manipulation. In this case, when the user twist-bends the flexible display apparatus 100, the area 321 including the selected objects may be deformed into a shape corresponding to the twist bending as shown in FIG. 15B.

The controller 130 may deform the displayed screen using at least one of a location of a bending line which is formed by sensed twist bending, a direction of the twist bending, an angle of the twist bending, a number of times that twist bending is performed, and a twist bending holding time.

The location of the bending line refers to a location of a + bending line and a - bending line which are formed by twist bending of the flexible display apparatus 100.

The direction of the twist bending refers to a direction in which the flexible display apparatus 100 is twisted according to bending locations of the flexible display apparatus 100 in the Z+ direction and Z- direction. For example, when the left side is bent in the Z+ direction and the right side is bent in the Z- direction, the twist bending direction is a first direction. Also, when the left side is bent in the Z- direction and the right side is bent in the Z+ direction, the twist bending direction is a second direction. Also, when the upper side is bent in the Z+ direction and the lower side is bent in the Z- direction, the twist bending direction is a third direction. That is, the twist bending direction varies according to a bending direction of each side or each vertex.

The angle of the twist bending refers to a bending angle in the + and - bending lines.

The number of times that twist bending is performed refers to a number of times that the flexible display apparatus 100 is twist-bent. When the flexible display apparatus 100 is released from a twist bending state to a predetermined state and then is twist-bent again, this operation may be counted as a twist bending operation.

The twist bending holding time refers to a time during which the flexible display apparatus 100 is held in the twist bending state. The twist bending may include flap twist bending and hold twist bending according to the twist bending holding time.

The flap twist bending refers to an operation of twist bending and directly releasing the twist bending. The hold twist bending refers to an operation of twist bending and then holding the twist bending for a predetermined time. It may be determined that the twist bending is flap twist bending or hold twist bending based on whether the twist bending holding time is longer than a predetermined time or shorter than the predetermined time.

For example, referring back to FIGS. 14A and 14B, when the location of the bending line is changed, a bending line for deforming the displayed screen may also be changed. When the twist bending direction is changed, the Z+ and Z- directions in which the displayed screen is bent may also be changed. When the twist bending angle is changed, a bending angle in the bending line for deforming the displayed screen may also be changed. The twisted shape of the displayed screen may be changed according to the number of times that the twist bending is performed. When the twist bending holding time is shorter than a predetermined time, the displayed screen may be deformed into a flat screen at the moment that the flexible display apparatus 100 is released from the twist bending and becomes flat. When the twist bending holding time is longer than the predetermined time, the displayed screen may maintain the twisted shape for a predetermined time.

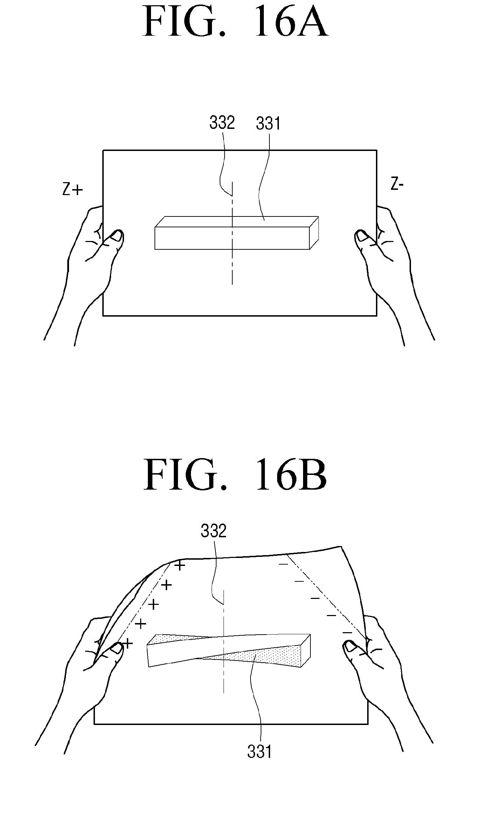

When a solid shape object is displayed on the screen, the controller 130 may deform the solid shape object into a shape corresponding to twist bending. This will be explained in detail with reference to FIGS. 16A and 16B.

FIGS. 16A through 16B are views illustrating deforming a solid shape object into a shape corresponding to twist bending. For the convenience of explanation, it is assumed that twist bending is whole twist bending. As shown in FIG. 16A, the display 110 may display a solid shape object 331. In this case, when the user twist-bends the flexible display apparatus 100, the solid shape object 331 may be deformed into a shape corresponding to the twist bending as shown in FIG. 16B.

The controller 130 may deform the solid shape object using at least one of a location of a bending line which is formed by the sensed twist bending, a direction of the twist bending, an angle of the twist bending, a number of times that twist bending is performed, and a twist bending holding time.

For example, referring to FIGS. 16A and 16B, when the location of the bending line is changed, a twist reference axis 332 of the solid shape object may be changed. When the twist bending direction is changed, a twist direction of the solid shape object may be changed. When the twist bending angle is changed, a degree of twisting with reference to the twist reference axis 332 of the solid shape object may be changed. Also, a twisted shape of the solid shape object may be changed according to the number of times that twist bending is performed. When the twist bending holding time is shorter than a predetermined time, the solid shape object may return to its original shape at the moment that the flexible display apparatus 100 is released from the twist bending and becomes flat. When the twist bending holding time is longer than the predetermined time, the solid shape object may maintain the twisted shape for a predetermined time.

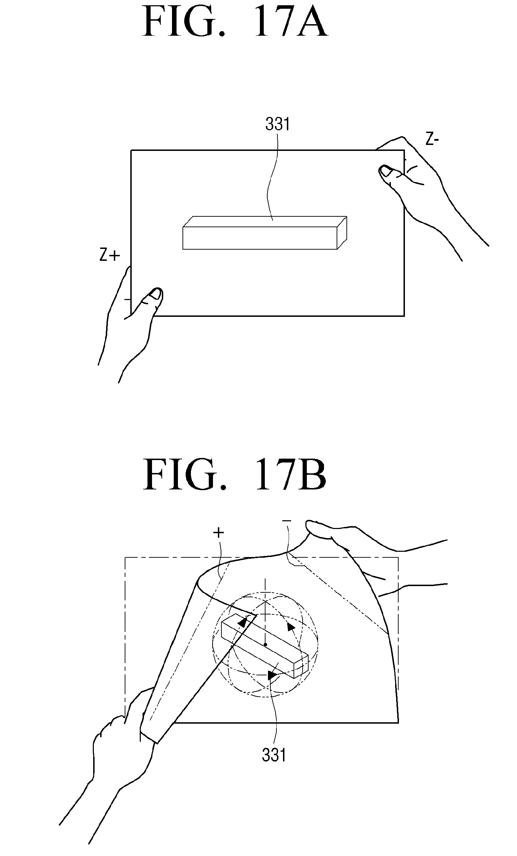

Also, when a solid shape object is displayed on the screen, the controller 130 may rotate the displayed solid shape object in a direction corresponding to twist bending. This will be explained in detail with reference to FIGS. 17A to 19B.

FIGS. 17A to 19B are views to illustrate rotating a solid shape object in a direction corresponding to twist bending. For the convenience of explanation, it is assumed that twist bending is whole twist bending. As shown in FIG. 17A, FIG. 18A, and FIG. 19A, the display 110 may display a solid shape object 331. In this case, when the user bends the left lower vertex of the flexible display apparatus 100 in the Z+ direction and bends the right upper vertex in the Z- direction, the solid shape object 331 may be rotated in a direction as shown in FIG. 17B.

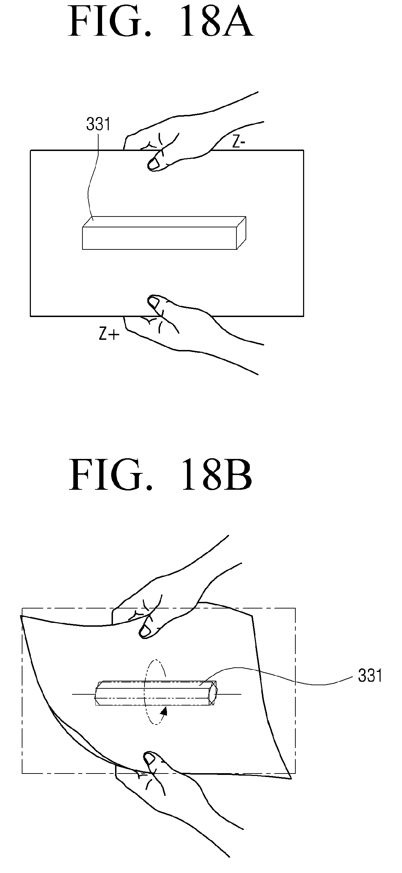

Also, when the user strongly bends the upper side of the flexible display apparatus 100 in the Z- direction and weakly bends the lower side in the Z+ direction, the solid shape object 331 may be rotated in a direction as shown in FIG. 18B. Also, when the user weakly bends the upper side in the Z- direction and strongly bends the lower side in the Z+ direction, the solid shape object 331 may be rotated in the opposite direction to that of FIG. 18B.

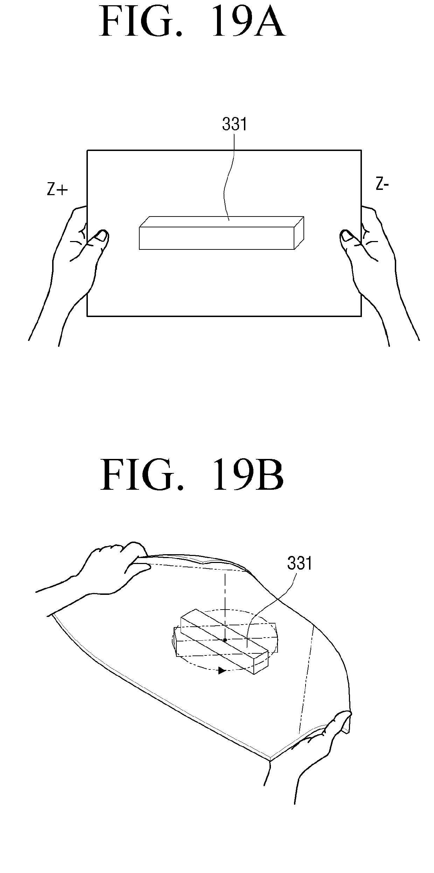

Also, when the user strongly bends the left side of the flexible display apparatus 100 in the Z+ direction and weakly bends the right side in the Z- direction, the solid shape object 331 may be rotated in a direction as shown in FIG. 19B. Also, when the user weakly bends the left side in the Z- direction and strongly bends the right side in the Z+ direction, the solid shape object 331 may be rotated in the opposite direction to that of FIG. 19B.

A magnitude of force may be sensed by the pressure sensor as explained above in FIGS. 9A and 9B. Also, as in the case of FIGS. 10A through 10E, the magnitude of force may be sensed based on a bending angle in the sensed + bending line and the sensed - bending line. Also, as in the case of FIGS. 11A and 11B, the magnitude of force may be recognized based on a resistance value which is output from the shape recognition sensor.

The controller 130 may control rotation of the solid shape object using at least one of a location of a bending line which is formed by sensed twist bending, a direction of the twist bending, an angle of the twist bending, a number of times that twist bending is performed, and a twist bending holding time.

Specifically, when the location of the bending line is changed, the rotation direction of the solid shape object may be changed. When the twist bending direction is changed, the rotation direction of the solid shape object may be changed. When the twist bending angle is changed, a degree of rotation with reference to a rotation axis of the solid shape object may be changed. The degree of rotation of the solid shape object may be changed according to the number of times that twist bending is performed. When the twist bending holding time is shorter than a predetermined time, the solid shape object is rotated only as much as the twist bending angle, and, when the twist bending holding time is longer than the predetermined time, the solid shape object may be continuously rotated with reference to the rotation axis.

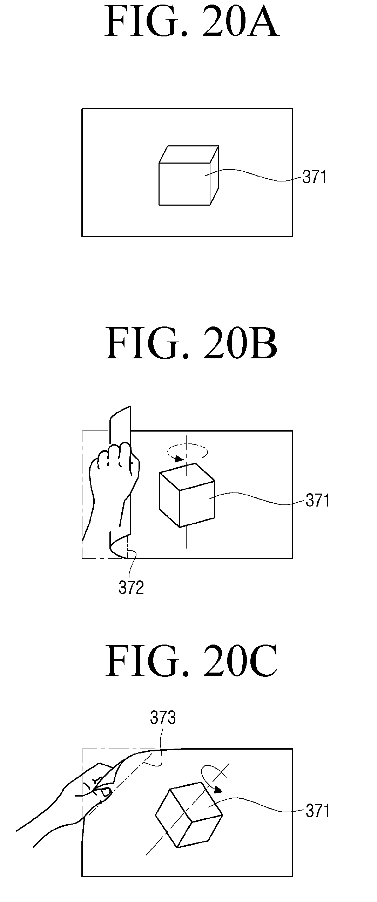

Also, when a solid shape object is displayed on the screen and sensed bending is normal bending, the controller 130 may rotate the displayed solid shape object in a direction corresponding to the normal bending. The controller 130 may determine a bending line of the sensed bending as a rotation axis, a bending angle of the sensed bending as a rotation angle of the solid shape object, a bending speed of the sensed bending as a rotation speed of the solid shape object, and a bending direction of the sensed bending as a rotation direction of the solid shape object, and may control the rotation of the solid shape object. This will be explained in detail with reference to FIG. 20.

FIGS. 20A through 20C are views illustrating rotating a solid shape object according to normal bending. As shown in FIG. 20A, the display 110 may display a solid shape object 371. In this case, when the user normally bends the flexible display apparatus 100, the solid shape object 371 may be rotated about a rotation axis corresponding to a bending line 372 in a direction corresponding to the bending direction Z+, as shown in FIG. 20B. Also, the solid shape object 371 may be rotated about a rotation axis corresponding to a bending line 373 in a direction corresponding to the bending direction Z+, as shown in FIG. 20C.

Also, although not shown in FIGS. 20A through 20C, the solid shape object 371 may be rotated by a rotation angle corresponding to a bending angle of the sensed bending at a rotation speed corresponding to a bending speed of the sensed bending. For example, when the bending angle is 30°, the solid shape object 391 may be rotated about the rotation axis by 30°, and, when the bending speed is high, the solid shape object 391 may be rotated about the rotation axis fast.

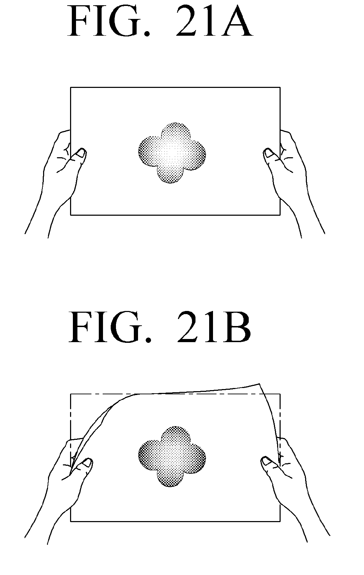

Also, when a color screen is displayed, the controller 130 may change the displayed color screen to a black and white screen according to sensed twist bending. This will be explained in detail with reference to FIG. 21.

FIGS. 21A through 21B are views illustrating changing a color screen to a black and white screen according to twist bending. For the convenience of explanation, it is assumed that twist bending is whole twist bending. As shown in FIG. 21A, the display 110 may display a color screen. In this case, when the user twist-bends the flexible display apparatus 100, the displayed color screen may be changed to a black and white screen as shown in FIG. 21B. However, even when partial twist bending is performed, the color screen may be changed to the black and white screen.

The controller 130 may control the change to the black and white screen using at least one of a location of a bending line which is formed by sensed twist bending, a direction of the twist bending, an angle of the twist bending, a number of times that twist bending is performed, and a twist bending holding time. For example, referring to FIGS. 21A and 21B, when the location of the bending line is changed, an area in which the color screen is changed to the black and white screen may be changed. Also, the change from the color screen to the black and white screen may be performed or not according to the twist bending direction. Also, when the twist bending angle is changed, a degree of change from the color screen to the black and white screen may be changed (for example, when the twist bending angle is less than a predetermined angle, a specific color is not changed to black or white). Also, the change from the color screen to the black and white screen is performed or not or the degree of change may be changed according to the number of times that twist bending is performed. When the twist bending holding time is shorter than a predetermined time, the flexible display apparatus 100 may return to the color screen at the moment that the flexible display apparatus 100 is released from the twist bending and becomes flat, and, when the twist bending holding time is longer than the predetermined time, the flexible display apparatus 100 may maintain the black and white screen for a predetermined time.

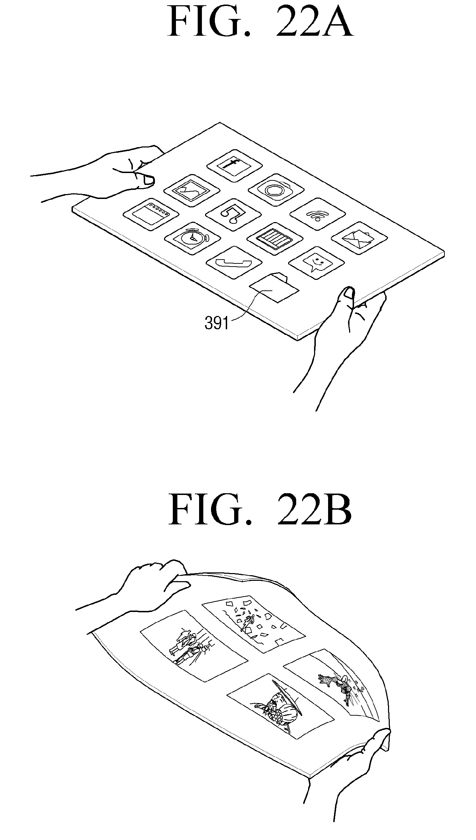

Also, when a displayed screen includes a folder icon, the controller 130 may control opening and closing of the folder icon according to sensed twist bending. This will be explained in detail with reference to FIGS. 22A and 22B.

FIGS. 22A through 22B are views illustrating controlling opening and closing of a folder icon according to twist bending. For the convenience of explanation, it is assumed that twist bending is whole twist bending. As shown in FIG. 22A, the display 110 may display a screen including a folder icon 391. In this case, when the user twist-bends the flexible display apparatus 100, the controller 130 may open the folder icon and display files included in the opened folder icon as shown in FIG. 22B. However, when partial twist bending is performed, the controller 130 may open the folder icon and display the files included in the opened folder icon.

The controller 130 may control opening and closing of the folder icon or control displaying of the files included in the opened folder icon, using at least one of a location of a bending line which is formed by sensed twist bending, a direction of the twist bending, an angle of the twist bending, a number of times that twist bending is performed, and a twist bending holding time. For example, referring to FIGS. 22A and 22B, when the location of the bending line is changed, the folder icon to be opened may be changed (for example, only the folder icon located within two bending lines may be opened). The opening and closing of the folder icon may be controlled according to the twist bending direction. When the twist bending angle is changed, the number of files that are displayed on the display 110 from among the files included in the opened folder icon may be changed (for example, when the twist bending angle is less than a predetermined angle, the number of files that are displayed on the display 110 from among the files included in the opened folder icon is less than a predetermined number). The opening and closing of the folder icon may be controlled according to the number of times that twist bending is performed. When the twist bending holding time is shorter than a predetermined time, the screen of the opened folder may be changed to the screen including the folder icon, which is the previous screen, at the moment that the flexible display apparatus 100 is released from the twist bending and becomes flat. When the twist bending holding time is longer than the predetermined time, the screen of the opened folder may be held for a predetermined time.

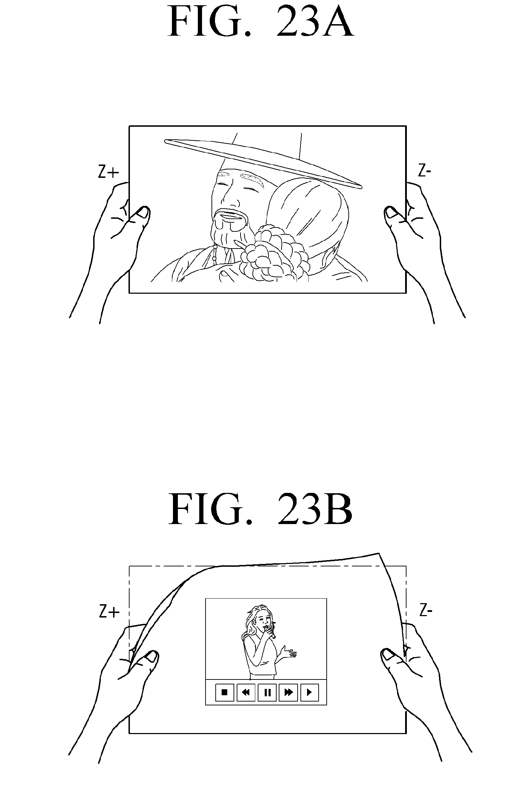

Also, when sensed twist bending is whole twist bending, the controller 130 may change a currently displayed application execution screen to another application execution screen. This will be explained in detail with reference to FIGS. 23A and 23B.

FIGS. 23A through 23B are views illustrating changing an application execution screen according to whole twist bending. As shown in FIG. 23A, the display 110 may display a movie application execution screen. In this case, when the user performs a whole twist bending manipulation, the display 110 may change the movie application executing screen to a music application execution screen as shown in FIG. 23B.

However, this should not be considered as limiting. When whole twist bending is sensed, the screen may be changed to various screens according to the screen currently displayed on the display 110. For example, when a movie content screen is currently displayed on the display 110 and whole twist bending is sensed, the screen may be changed to a screen on which detailed information on the displayed movie content is displayed. Also, all movie contents stored in the flexible display apparatus 100 may be arranged in the form of a list or icons and displayed. Also, the screen may be changed to a home screen.

Also, when the user maintains the whole twist bending, the changing of the screen may be repeated. For example, a currently displayed first application execution screen may be continuously changed up to a final nth application execution screen. Also, when the user maintains the whole twist bending, moving on menus in a list of menus including a plurality of menus is repeated from the first menu to the last nth menu. The change of the screen and the speed of moving on the menu may vary according to a whole twist bending holding time and a whole twist bending angle.

Also, when partial twist bending is sensed, the controller 130 may perform a function provided by a currently displayed application. This will be explained in detail with reference to FIGS. 23A and 23B.

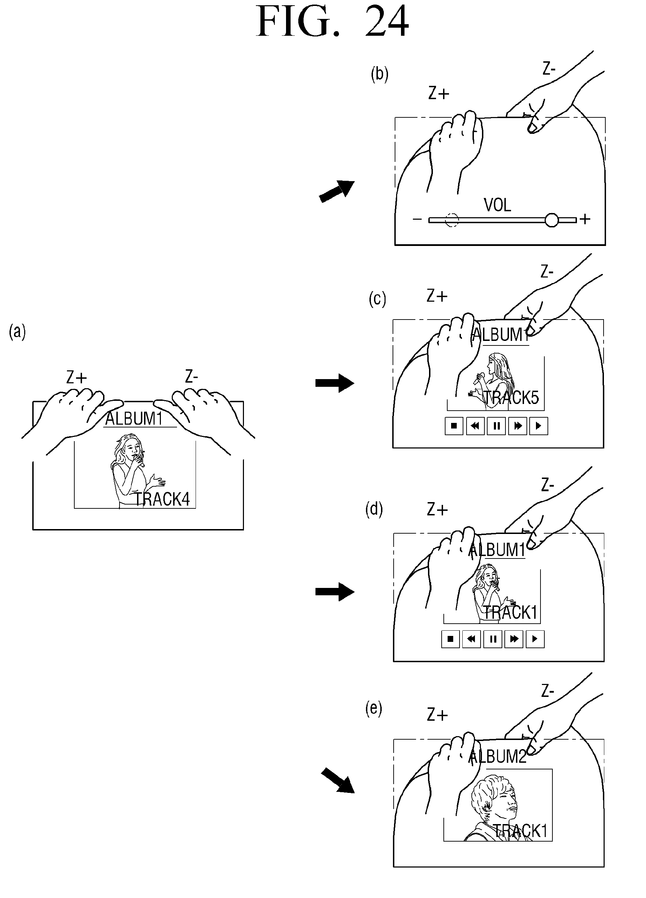

FIG. 24 is a view to illustrate performing a function provided by an application according to partial twist bending. As shown in view (a) of FIG. 24, the display 110 may display a music application execution screen. In this case, when the user performs a partial twist bending manipulation, the display 110 may turn up or down the volume as shown in view (b) of FIG. 24. Also, the display 110 may change a current track to a next track or a previous track as shown in view (c) of FIG. 24, may change a current track to a first track or a last track as shown in view (d) of FIG. 24, or may change a current album to a next album or a previous album as shown in view (e) of FIG. 24.

Also, when a menu selectable by the user is displayed, and when whole twist bending is sensed and the sensed whole twist bending is maintained for a predetermined time, the controller 130 may navigate each item of the menu in sequence. Accordingly, the user may easily select a menu that he/she desires using twist bending.

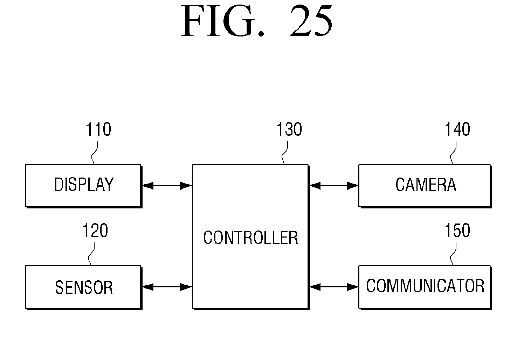

FIG. 25 is a block diagram illustrating a flexible display apparatus according to another exemplary embodiment. Referring to FIG. 25, the flexible display apparatus 100 may include a display 110, a sensor 120, a controller 130, a camera 140, and a communicator 150. A detailed explanation of the elements that have been described above is omitted.

The camera 140 photographs an image. A detailed operation of the camera 140 has been described above and thus a detailed explanation is omitted.

The communicator 150 connects the flexible display apparatus 100 to an external apparatus. In particular, the communicator 150 may receive augmented reality information corresponding to the photographed image.

The communicator 150 is configured to connect the flexible display apparatus 100 to an external apparatus. The communicator 150 may access the external apparatus in a wireless or wire method through a local area network (LAN) and the Internet, through a universal serial bus (USB) port, through a mobile connection network such as 3G or 4G, or through a short-range wireless communication method such as near field communication (NFC) or radio frequency identification (RFID).

The controller 130 may control all or some of the display 110, the sensor 120, the camera 140, and the communicator 150. In particular, the controller 130 may receive a GPS signal from a GPS satellite using a GPS module and may detect a current location of the flexible display apparatus 100. Also, when an image is photographed by the camera 140, the controller 130 may recognize a photographing direction of the photographed image with reference to the detected current location using a magnetic field sensor or a geomagnetic sensor. In this case, the controller 130 may control the communicator 150 to transmit the detected current location and the photographing direction to an augmented reality database server.

The augmented reality database server may detect augmented reality information corresponding to the photographed image using the current location of the flexible display apparatus 100 and the photographing direction. Accordingly, the communicator 150 may receive the augmented reality information corresponding to the photographed image.

When the augmented reality information on the photographed image is received, the controller 130 may control the display 110 to display an augmented reality screen corresponding to the received augmented reality information.

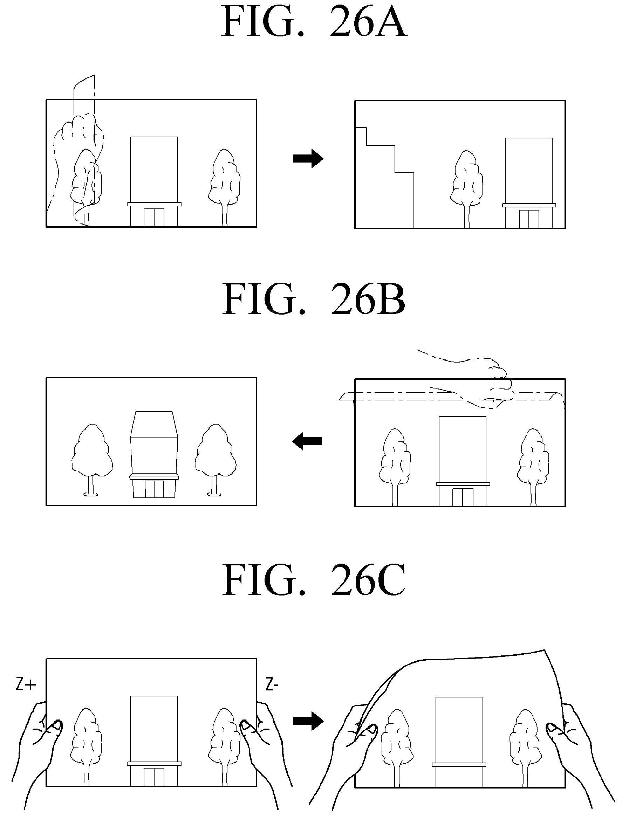

Also, when the augmented reality screen is displayed and bending is sensed, the controller 130 may rotate the augmented reality screen in a direction corresponding to the sensed bending. This will be explained in detail with reference to FIG. 26.

FIGS. 26A through 26C are views illustrating rotating an augmented reality screen according to bending. As shown in FIG. 26A, the display 110 may display an augmented reality screen corresponding to an image photographed by the camera 140. In this case, when the user normally bends a left area of the flexible display apparatus 100, the display 110 may display a left area of the augmented reality screen that is not currently displayed. Also, according to an exemplary embodiment, when the left area of the flexible display apparatus 100 is normally bent in the Z+ direction, the display 110 may three-dimensionally rotate the augmented reality screen to the right about a rotation axis corresponding to a bending line, and may display it. When the user normally bends a right area of the flexible display apparatus 100, a function opposing the above-described function may be performed.

Also, when the user normally bends an upper area of the flexible display apparatus 100 in the Z+ direction as shown in FIG. 26B, the display 110 may 3-dimensionally rotate the augmented reality screen downwardly about a rotation axis corresponding to a bending line. Also, according to an exemplary embodiment, the display 110 may display an upper area of the augmented reality screen that is not currently displayed. When the user normally bends a lower area of the flexible display apparatus 100, a function opposing the above-described function may be performed.

Also, when the user performs a whole twist bending operation on the flexible display apparatus 100 as shown in FIG. 26C, the display 110 may display a surface which is opposite to the displayed augmented reality screen. Also, according to an exemplary embodiment, an opposite surface of the displayed augmented reality screen may be displayed according to partial twist bending.

Although not shown in FIGS. 26A through 26C, the controller 130 may determine a bending angle of sensed bending as a rotation angle of a solid shape object, and a bending speed of the sensed bending as a rotation speed of the solid shape object, and may rotate the augmented reality screen based on the above.

Also, the controller 130 may control to transmit at least one selected sharing file from among sharing files displayed on the display 110. The sharing file may be an application file, a movie content file, a music content file, or etc.

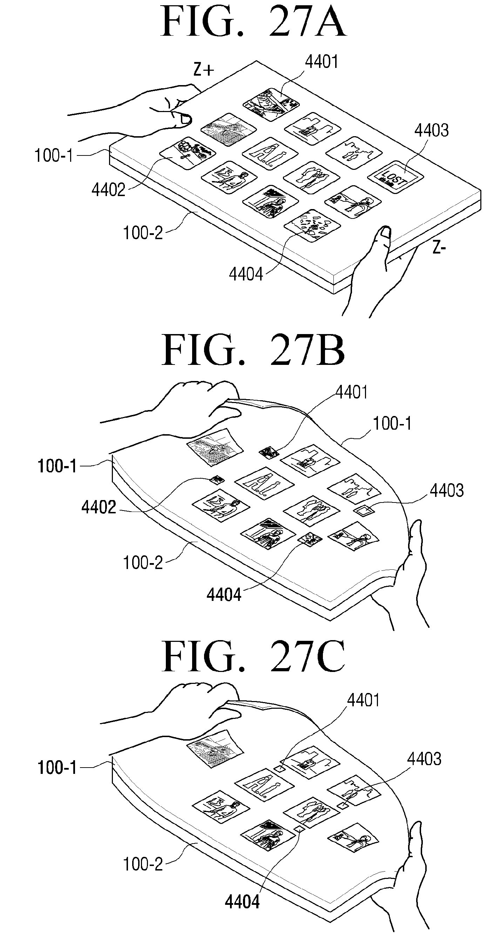

Specifically, when twist bending is sensed, the controller 130 may control the display 110 to move at least one sharing file selected from among sharing files displayed on the display 110 to a predetermined area. Also, the controller 130 may control the communicator 150 to transmit the moved at least one sharing file to an external apparatus which is interlocked with the flexible display apparatus 100. When transmitting the at least one sharing file is completed, the controller 130 may control the display 110 not to display the transmitted at least one sharing file. The selected at least one sharing file may be moved to the predetermined area while being zoomed out. This will be explained in detail with reference to FIGS. 27A through 27C.

The external apparatus recited herein may be various types of portable apparatuses which are easy to carry and have a display function, such as a mobile phone, a smartphone, a PMP, a PDA, a tablet PC, and a navigation system.

FIGS. 27A through 27C are views illustrating a method for transmitting at least one selected file according to twist bending. For the convenience of explanation, it is assumed that twist bending is whole twist bending. As shown in FIG. 27A, a flexible display apparatus 100-1 to transmit a file may be placed over a flexible display apparatus 100-2 to receive a file.

The flexible display apparatus to transmit the file may display a plurality of sharing files. In this case, the user may select sharing files 4401, 4402, 4403, and 4404 to be transmitted to an external apparatus. The sharing files 4401, 4402, 4403, and 4404 to be transmitted are selected, and the, the user may perform twist bending as shown in FIG. 27B.

When the two overlapping flexible display apparatuses 100-1 and 100-2 are twist-bent, the flexible display apparatus 100-1 to transmit the file and the flexible display apparatus 100-2 to receive the file may be connected with each other. For example, when the two overlapping flexible display apparatus 100-1 and 100-2 are twist-bent, the flexible display apparatus 100-1 to transmit the file and the flexible display apparatus 100-2 to receive the file perform pairing and are connected to each other by Bluetooth.

Also, the controller 130 may control the display 110 to move the selected at least one sharing file 4401, 4402, 4403, and 4404 to a predetermined area while zooming out them as shown in FIGS. 27B and 27C. The moved at least one sharing file may be transmitted to the flexible display apparatus 100-2 to receive the file. The predetermined area may be a center area of the display 110, and proximity to the predetermined area may vary according to a degree of transmission of the selected at least one sharing file 4401, 4402, 4403, and 4404. For example, when the selected first sharing file is transmitted to the external apparatus by 80% , and the selected second sharing file is transmitted to the external apparatus by 50%, the first sharing file is closer to the predetermined area than the second sharing file.

Also, the selected at least one sharing file 4401, 4402, 4403, and 4404 may be moved to the predetermined area while being zoomed out as shown in FIGS. 27B and 27C. In this case, a degree of zooming out may vary according to the degree of transmission of the selected at least one file 4401, 4402, 4403, and 4404. For example, when the selected first sharing file is transmitted to the external apparatus by 80% and the selected second sharing file is transmitted to the external apparatus by 50%, a size of an icon corresponding to the first sharing file may be smaller than that of the second sharing file.

Also, the sharing file 4403 that has been completely transmitted from among the transmitted at least one sharing file may not be displayed on the display 110 as shown in FIG. 27C.

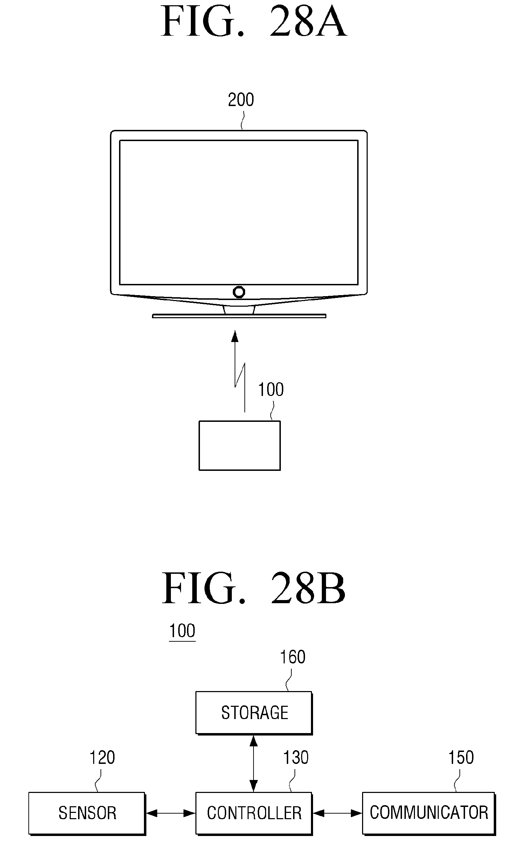

FIGS. 28A through 28B are views illustrating a configuration of a flexible apparatus which is interlocked with an external display apparatus according to still another exemplary embodiment.

Referring to FIG. 28A, the flexible apparatus 100 may be connected to a display apparatus 200 in a wire or wireless manner. The flexible apparatus 100 may be made of a flexible material and thus can be bent by the user as described above, whereas the display apparatus 200 may be implemented by using a general display apparatus which is not flexible. Specifically, the display apparatus 200 may be implemented by using various kinds of display apparatuses such as a TV, an e-album, a monitor, an advertisement board. In this case, the flexible apparatus 100 may include only the flexible substrate from among the elements of the display 110 of FIG. 2, except for the elements for supporting the display function.

For example, the flexible apparatus 100 may be operated as a remote control apparatus for controlling the display apparatus 200 as a controlled apparatus. The flexible apparatus 100 may receive a user command to control the display apparatus 200 and may transmit a control signal corresponding to the input user command to the display apparatus 200.

In particular, the flexible apparatus 10 senses twist bending and transmits a signal corresponding to the sensed twist bending to the display apparatus 200. In this case, the flexible apparatus 100 may transmit the signal corresponding to the sensed twist bending (hereinafter, referred to as a control signal), but may convert the signal corresponding to the sensed twist bending into a control command to control the display apparatus 200 (hereinafter, referred to as control information), and may transmit the converted signal. This depends on whether an operation of calculating the control information based on the sensed signal is performed in the flexible apparatus 100 or the display apparatus 200.

The flexible apparatus 100 and the display apparatus 200 may communicate with each other in various communication methods such as Bluetooth, IR interface, Wi-Fi, PAN, LAN, WAN, wired I/O, and USB. For example, when the flexible apparatus 100 and the display apparatus 200 communicate with each other through Bluetooth, they may be interlocked with each other through Bluetooth pairing. The Bluetooth pairing is well known to an ordinary skilled person in the related art and thus a detailed description thereof is omitted.

When the display apparatus 200 receives a control signal corresponding to a bending manipulation from the flexible apparatus 100 which is bendable, the display apparatus 200 performs a control operation according to the control signal. The control signal may be implemented by using an infrared ray (IR) signal, and may be a communication signal which is transmitted through various interfaces such as Bluetooth, NFC, Wi-Fi, Zigbee, and serial interface. In this case, the flexible apparatus 100 may exclude the display 110 as shown in FIG. 28B, and may include the sensor 120, the controller 130, and the storage 160, and may further include a communicator 150 to communicate with the display apparatus 200.

The storage 160 may store various commands corresponding to bending manipulations. When a bending manipulation is sensed by the sensor 110, the controller 120 detects a command corresponding to the sensed bending manipulation from the storage 160, generates a control signal corresponding to the command, and transmits the control signal to the display apparatus 200 through the communicator 150. The command stored in the storage 160 may be a command that is assigned according to a bending manipulation supported by the display apparatus 200 and is stored in advance. In particular, the storage 160 may store a command corresponding to twist bending.

Accordingly, when a bending manipulation is sensed by the sensor 120, the controller 130 may transmit a control signal to instruct the display apparatus 200 to perform a control operation corresponding to the sensed bending manipulation to the display apparatus 200. Accordingly, the user may control the operation of the external display apparatus 200 by bending the flexible apparatus 100.

For example, when it is determined that twist bending of the flexible apparatus 100 is performed based on a bending manipulation, the flexible apparatus 100 may transmit a control signal to perform a corresponding function to the display apparatus 200.

However, as described above, the flexible apparatus 100 may transmit only a sensing signal to the display apparatus 200 and the display apparatus 200 may generate a control signal corresponding to the sensing signal.

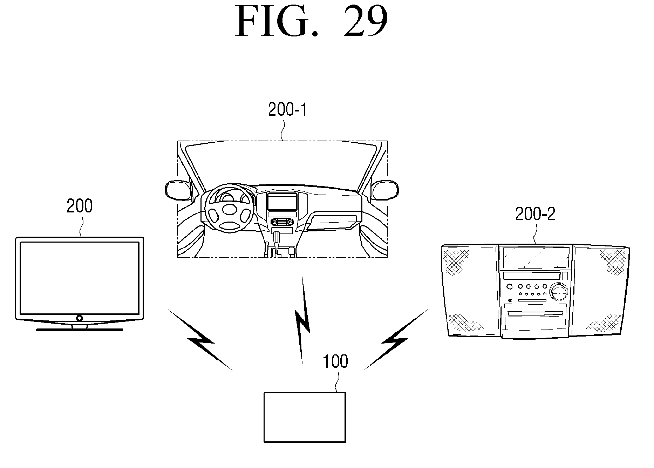

FIG. 29 is a view illustrating a configuration of a flexible apparatus which is interlocked with an external display apparatus according to still another exemplary embodiment.

As shown in FIG. 29, the flexible apparatus 100 may be implemented by using an integrated remote control apparatus which is able to control a plurality of external apparatuses.

For example, as shown in FIG. 29, the flexible apparatus 100 may be implemented in the form of controlling a plurality of external apparatuses such as a car 200-1 and an audio system 200-2 in addition to a display apparatus 200. Because the same principle as that of a related-art integrated remote control apparatus may be applied when the function of controlling the plurality of apparatuses is performed, a detailed description is omitted.

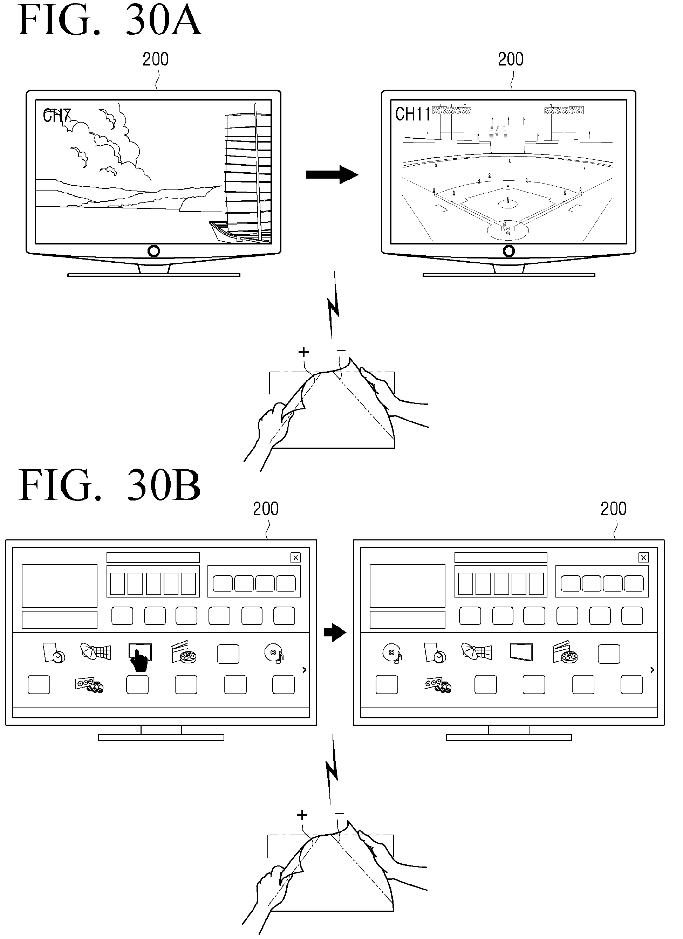

FIGS. 30A through 30B are views illustrating a method for operating a flexible apparatus similar to the flexible apparatus shown in FIGS. 28A through 29.

When twist bending of the flexible apparatus 100 is sensed as shown in FIG. 30, various functions of the display apparatus 200 may be controlled. For example, when a specific channel is selected and broadcasted in the display apparatus 200, and twist bending is sensed in the flexible apparatus 100 as shown in FIG. 30A, the display apparatus 100 may change the channel. Also, the display apparatus 200 may perform various functions such as adjusting a volume, adjusting brightness, changing a display page, and exchanging a file, in addition to changing the channel. For example, when the direction of the sensed twist bending is the first direction, the display apparatus 200 may change the channel up, and, when the direction of the sensed twist bending is the second direction, the display apparatus 200 may change the channel down.

Also, when the angle of the sensed twist bending is a first angle, the display apparatus 200 may change the channel up by one channel, and, when the angle of the sensed twist bending is a second angle which is greater than the first angle, the display apparatus 200 changes the channel up by two channels.

Also, when the sensed twist bending is the hold twist bending, the display apparatus 200 continues changing the channel, and, when the sensed twist bending is the flap twist bending, the display apparatus 200 changes the channel once.

Also, when a UI screen is displayed on the display apparatus 200 and twist bending is sensed in the flexible apparatus 100 as shown in FIG. 30B, the display apparatus 200 may change the UI screen to another UI screen and display it. For example, the currently displayed UI page may be changed to the next UI page.

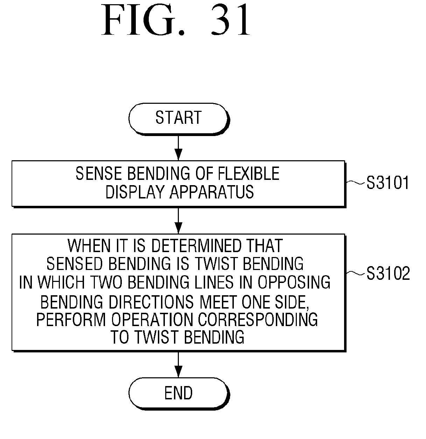

FIG. 31 is a flowchart to illustrate a control method of a flexible display apparatus according to an exemplary embodiment. Referring to FIG. 31, bending of the flexible display apparatus is sensed (S3101).

When it is determined that the sensed bending is twist bending in which two bending lines formed in opposing bending directions meet a certain side, an operation corresponding to the sensed twist bending is performed (S3102). The operation corresponding to the sensed twist bending may be deforming a displayed screen into a shape corresponding to the sensed twist bending.

The performing the operation may be deforming only an object selected from a plurality of objects displayed on the screen by a user manipulation, into a shape corresponding to the twist bending.

The performing the operation may be, when a solid shape object is displayed on the screen, deforming the solid shape object into a shape corresponding the twist bending.

The performing the operation may be, when a solid shape object is displayed on the screen, rotating the solid shape object in a direction corresponding to the twist bending

The performing the operation may be, when a solid shape object is displayed and normal bending is sensed, rotating the displayed solid shape object in a direction corresponding to the normal bending.

The performing the operation may be, when a color screen is displayed, changing the color screen to a black and white screen according to the sensed bending twist.

The performing the operation may be, when the displayed screen includes a folder icon, opening/closing the folder icon according to the sensed twist bending.

The performing the operation may be, when whole twist bending is sensed, changing a currently displayed application execution screen to another application execution screen.

The performing the operation may be, when partial twist bending is sensed, performing a function provided by the currently displayed application.

The control method may further include receiving augmented reality information corresponding to a photographed image. In this case, the performing the operation may be displaying an augmented reality screen corresponding to the received augmented reality information, and, when normal bending is sensed, rotating the displayed augmented reality screen in a direction corresponding to the normal bending.

The control method may further include, when twist bending is sensed, moving at least one sharing file selected from among sharing files displayed on the display to a predetermined area while zooming out the sharing file, transmitting the moved at least one sharing file to an external apparatus which is interlocked with the flexible display apparatus, and, when the transmitting the at least one sharing file is completed, not displaying the transmitted at least one sharing file.

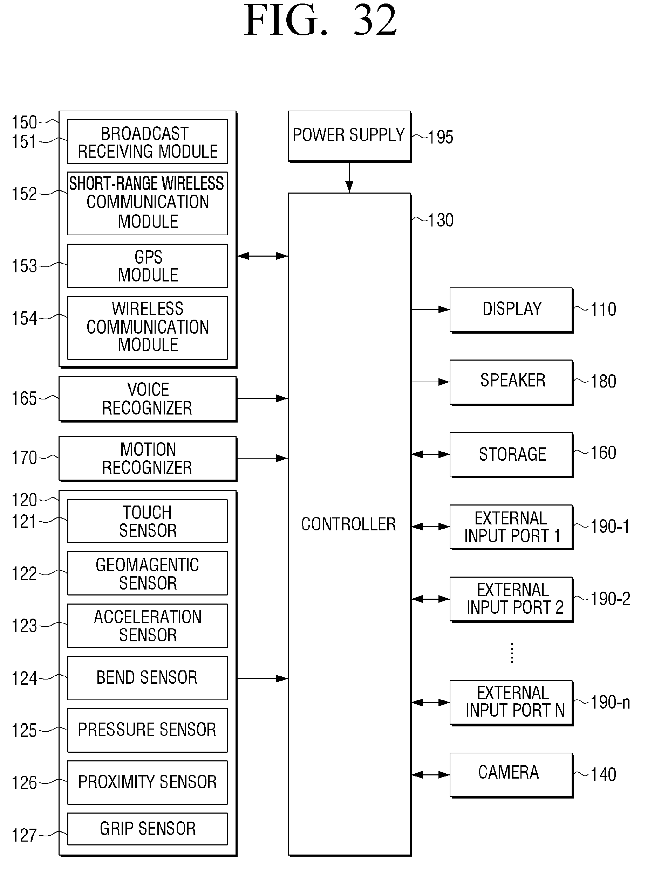

FIG. 32 is a block diagram illustrating a detailed configuration of a flexible display apparatus to explain operations according to various exemplary embodiments. Referring to FIG. 32, a flexible display apparatus 100 may include all or some of a display 110, a sensor 120, a controller 130, a camera 140, a communicator 150, a storage 160, a voice recognizer 165, a motion recognizer 170, a speaker 180, external input ports 190-1∼190-n, and a power supply 195.

The display 110 has flexibility. The detailed configuration and operation of the display have been described above and thus a redundant explanation is omitted.

The storage 160 may store various programs or data associated with the operation of the flexible display apparatus 100, setting information set by the user, system operating software, various application programs, and information on operations corresponding to a user's manipulation.

The sensor 120 senses a bending manipulation and a touch manipulation on the entire flexible display apparatus 100 including the display 110. Referring to FIG. 32, the sensor 120 may include various kinds of sensors such as a touch sensor 121, a geomagnetic sensor 122, an acceleration sensor 123, a bend sensor 124, a pressure sensor 125, a proximity sensor 126, and a grip sensor 127, etc.

The touch sensor 121 may be implemented by using a capacitive type or a resistive type of sensor. The capacitive type calculates touch coordinates by sensing minute electricity excited in a user's body when a part of the user's body touches the surface of the display 110, using a dielectric substance coated on the surface of the display 110. The resistive type includes two electrode plates, and, when a user touches a screen, calculates touch coordinates by sensing an electric current flowing due to contact between upper and lower plates at the touched point. As described above, the touch sensor 121 may be embodied in various forms.

The geomagnetic sensor 122 senses a rotation state and a moving direction of the flexible display apparatus 100. The acceleration sensor 123 senses a degree of tilt of the flexible display apparatus 100. As described above, the geomagnetic sensor 122 and the acceleration sensor 123 may be used to sense bending characteristics such as a bending direction or a bending area of the flexible display apparatus 100. However, the geomagnetic sensor 122 and the acceleration sensor 123 may be used to sense a rotation state or a tilt state of the flexible display apparatus 100.

The bend sensor 124 may be embodied in various shapes and numbers as described above, and may sense a bending state of the flexible display apparatus 100. The configuration and operation of the bend sensor 124 have been described above and thus a redundant explanation is omitted.

The pressure sensor 125 senses a magnitude of pressure exerted to the flexible display apparatus 100 when the user performs a touch or bending manipulation, and provides the magnitude of pressure to the controller 130. The pressure sensor 125 may include a piezo film which is embedded in the display 110 and outputs an electric signal corresponding to the magnitude of pressure. Although the pressure sensor 125 is a separate element from the touch sensor 121 in FIG. 32, when the touch sensor 121 is implemented by using a resistive touch sensor, the resistive touch sensor may also perform the function of the pressure sensor 125.

The proximity sensor 126 senses a motion which approaches without directly contacting the display surface. The proximity sensor 126 may be implemented by using various types of sensors such as a high-frequency oscillation type proximity sensor which forms a high frequency magnetic field and detects an electric current induced by a magnetic characteristic which is changed when an object approaches, a magnetic type proximity sensor which uses a magnet, and a capacitive type proximity sensor which detects capacitance that changes when an object approaches, etc.

The grip sensor 127 is disposed on a border or a handle of the flexible display apparatus 100 separately from the pressure sensor 125, and senses a user's grip. The grip sensor 127 may be implemented by using a pressure sensor or a touch sensor.

The controller 130 analyzes various sensing signals sensed by the sensor 120, grapes a user's intention, and performs an operation according to the user's intention. For example, the controller 130 may process data which is obtained by communicating with an external apparatus, or data which is stored in the storage 160, and may output the data through the display 110 and the speaker 180. In this case, the controller 130 may communicate with the external apparatus using the communicator 150.

The communicator 150 may communicate with various types of external apparatuses according to various communication methods. The communicator 150 may include various communication modules such as a broadcast receiving module 151, a short-range wireless communication module 152, a GPS module 153, and a wireless communication module 154. The broadcast receiving module 151 may include a terrestrial broadcast receiving module (not shown) including an antenna to receive a terrestrial broadcast signal, a demodulator, and an equalizer, and a digital multimedia broadcasting (DMB) module to receive and process a DMB broadcast signal. The short-range wireless communication module 152 is a module that communicates with an external apparatus located nearby according to a short-range wireless communication method such as near field communication (NFC), Bluetooth, or Zigbee, etc. The GPS module 153 is a module that receives a GPS signal from a GPS satellite and detects a current location of the flexible display apparatus 100. The wireless communication module 154 is a module that is connected to an external network according to a wireless communication protocol such as Wi-Fi or IEEE etc. and communicates with the external network. The wireless communication module 154 may further include a mobile communication module that accesses a mobile communication network and performs communication according to various mobile communication standards such as 3^{rd} generation (3G), 3^{rd} generation partnership project (3GPP), and long term evolution (LTE).

The controller 130 may selectively activate the elements of the communicator 150 that are necessary for performing the operation according to the user's intention, and may perform the operation.

The controller 130 may recognize voice input or motion input besides the bending or touch manipulation, and may perform an operation corresponding to the input. In this case, the controller 130 may activate the voice recognizer 165 or the motion recognizer 170.

The voice recognizer 165 collects a user's voice or an external sound using a voice obtaining means such as a microphone (not shown), and transmits the user's voice or the external sound to the controller 130. When the user's voice is consistent with a pre-set voice command in a voice control mode, the controller 130 may perform a task corresponding to the user's voice. The task, which is controllable using a voice, may include various tasks such as adjusting a volume, selecting a channel, zapping (e.g., changing) a channel, adjusting a display property, reproducing, pausing, rewinding, fast forwarding, executing an application, selecting a menu, turning on an apparatus, and turning off an apparatus.

The motion recognizer 170 obtains a user's image using an image picking up means (not shown) such as a camera, and provides the user's image to the controller 130. When the controller 130 analyzes the user's image and determines that the user makes a motion gesture corresponding to a pre-set motion command in a motion control mode, the controller 130 performs an operation corresponding to the motion gesture. For example, various tasks such as zapping a channel, turning on an apparatus, turning off, pausing, reproducing, stopping, rewinding, fast forwarding, mute, etc. may be controlled according to a motion. The above-described tasks that are controllable according to a voice and the tasks that are controllable according to a motion are merely examples and are not limited.

The external input ports 1, 2, ..., n 190-1-190-n may be connected to various types of external apparatuses and may receive various data or programs or control commands. Specifically, the external input ports may include USB ports, headset ports, mouse ports, and LAN ports, etc.

The power supply 195 supplies power to the elements of the flexible display apparatus 100.

Although FIG. 32 illustrates various elements which may be included in the flexible display apparatus 100, the flexible display apparatus 100 may not necessarily include all of the elements and may not include only the above elements. Therefore, some of the elements may be omitted or added according to a product type of the flexible display apparatus 100, or may be replaced with other elements.

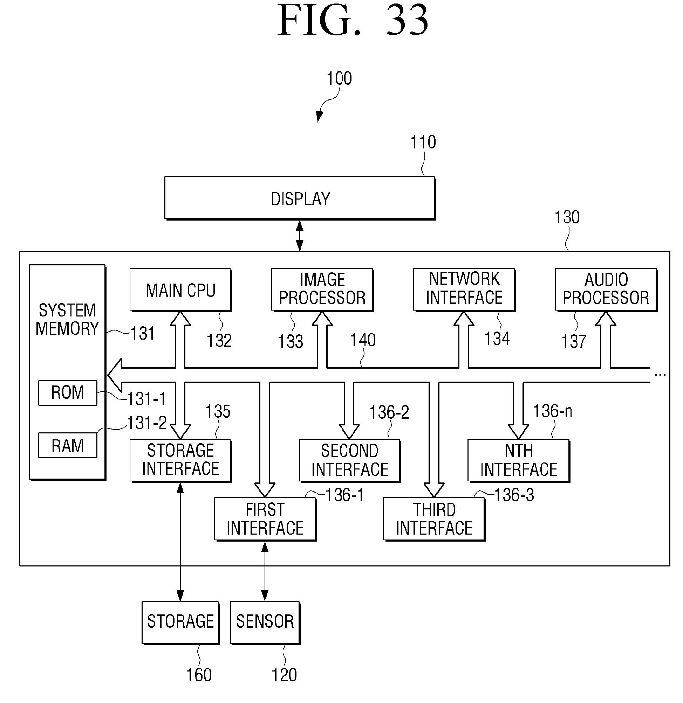

FIG. 33 is a view to illustrate a detailed configuration of the controller 130 according to various exemplary embodiments.

Referring to FIG. 33, the controller 130 may include a system memory 131, a main CPU 132, an image processor 133, a network interface 134, a storage interface 135, first to nth interfaces 136-1 to 136-n, an audio processor 137, and a system bus 138.

The system memory 131, the main CPU 132, the image processor 133, the network interface 134, the storage interface 135, the first to nth interfaces 136-1 to 136-n, and the audio processor 137 may be connected to one another through the system bus 138, and may exchange various data or signals with one another.

The first to nth interfaces 136-1 to 136-n support interfacing between the elements including the sensor 120 and the elements of the controller 130. In FIG. 33, the sensor 120 is connected to only the first interface 136-1. However, when the sensor 120 includes various types of sensors as shown in FIGS. 30A and 30B, each of the sensors may be connected through each interface. Also, at least one of the first to nth interfaces 136-1 to 136-n may be implemented by using a button which is provided on a body of the flexible display apparatus 100, or an input interface which receives various signals from an external apparatus which is connected through the external input ports 1 to n.

The system memory 131 includes a read only memory (ROM) 131-1 and a random access memory (RAM) 131-2. The ROM 131-1 stores a set of commands for system booting. When a turn on command is input and power is supplied, the main CPU 132 copies an OS which is stored in the storage 140 into the RAM 131-2 according to a command stored in the ROM 131-1, executes the OS, and boots the system. When booting is completed, the main CPU 132 copies various applications stored in the storage 160 into the RAM 131-2, executes the applications copied into the RAM 131-2, and performs various operations.

As described above, the main CPU 132 may perform various operations according to execution of the application stored in the storage 160.

The storage interface 135 is connected to the storage 160 and exchanges various programs, content, and data etc. with the storage 160.

For example, when the user performs a touch manipulation or a bending manipulation corresponding to a reproducing command to reproduce and display a content stored in the storage 160, the main CPU 132 accesses the storage 160 through the storage interface 135, generates a list of stored contents, and displays the list on the display 110. In this state, when the user performs a touch manipulation or a bending manipulation to select one content, the main CPU 132 executes a content reproducing program which is stored in the storage 160. The main CPU 132 controls the image processor 133 to form a content reproducing screen according to a command included in the content reproducing program.

The image processor 133 may include a decoder, a renderer, and a scaler, etc. Accordingly, the image processor 133 decodes a stored content, renders the decoded content data and forms a frame, and scales a size of the frame according to a screen size of the display 110. The image processor 133 provides the processed frame to the display 110 and displays the same.

The audio processor 137 refers to an element that processes audio data and provides the audio data to a sound outputting means such as a speaker 180. The audio processor 137 performs audio signal processing by decoding audio data which is stored in the storage 160 or audio data which is received through the communicator 150, filtering noise, and amplifying the audio data to an appropriate decibel. In the above example, when the content to be reproduced is a moving image content, the audio processor 137 may process the audio data which is de-multiplexed from the moving image content, and may provide the audio data to the speaker 180 so that the audio data is synchronized with the image processor 133 and is output.

The network interface 134 is connected to external apparatuses through a network. For example, when a web browser program is executed, the main CPU 132 accesses a web server through the network interface 134. When web page data is received from the web server, the main CPU 132 controls the image processor 133 to form a web page screen, and displays the web page screen on the display 110.

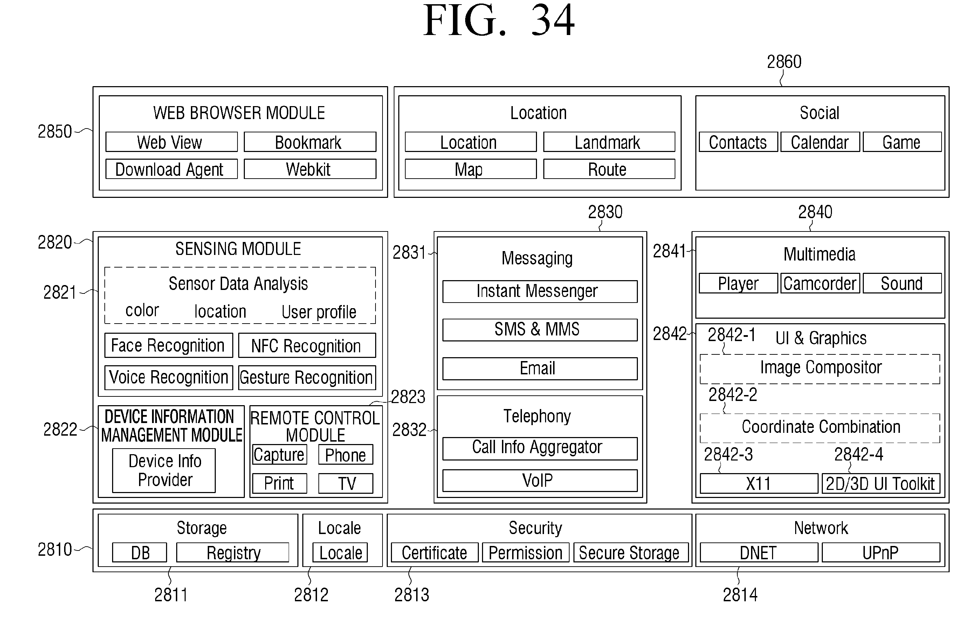

FIG. 34 is a view illustrating a software structure of the storage 160 to support the operations of the controller 130 according to the above-described various exemplary embodiments. Referring to FIG. 34, the storage 160 includes a base module 2810, a device management module 2820, a communication module 2830, a presentation module 2840, a web browser module 2850, and a service module 2860.

The base module 2810 is a module that processes signals transmitted from each hardware element that is included in the flexible display apparatus 100, and transmits the signals to an upper layer module.

The base module 2810 includes a storage module 2811, a location-based module 2812, a security module 2813, and a network module 2814.

The storage module 2811 is a program module that manages a database (DB) or a registry. The location-based module 2812 is a program module that is interlocked with hardware such as a GPS chip and supports a location-based service. The security module 2813 is a program module that supports certification for hardware, permission of a request, and a secure storage, and the network module 2814 includes a Distributed.net (DNET) module and a Universal Plug and Play (UPnP) module as a module for supporting network connection.

The device management module 2820 is a module that manages external input and information on an external device, and uses the same. The device management module 2820 may include a sensing module 2821, a device information management module 2822, and a remote control module 2823, etc.

The sensing module 2821 is a module that analyzes sensor data provided from various sensors of the sensor 120. Specifically, the sensing module 2821 is a program module that detects a location of a user or an object, color, shape, size, and other profiles, etc. The sensing module 2821 may include a face recognition module, a voice recognition module, a motion recognition module, and an NFC recognition module. The device information management module 2822 is a module that provides information on various types of devices, and the remote control module 2823 is a program module that remotely controls a peripheral device such as a telephone, a television (TV), a printer, a camera, and an air conditioner, etc.

The communication module 2830 is a module to communicate with an external apparatus. The communication module 2830 includes a messaging module 2831 such as a messenger program, a short message service (SMS) and multimedia message service (MMS) program, and an email program, etc., and a telephony module 2832 which includes a call information aggregator program module and a voice over internet protocol (VoIP) module.

The presentation module 2840 is a module that generates a display screen. The presentation module 2840 includes a multimedia module 2841 to reproduce multimedia content and output the multimedia content, and a user interface (UI) and graphic module 2842 to process a UI and graphics. The multimedia module 2841 may include a player module, a camcorder module, and a sound processing module. Accordingly, the multimedia module 2841 generates a screen and a sound by reproducing various multimedia contents, and reproduces the same. The UI and graphic module 2842 may include an image compositor module 2842-1 to combine images, a coordinate combination module 2842-2 to combine coordinates on a screen to display an image and generate coordinates, an X1 module 2842-3 to receive various events from hardware, and a 2D/3D UI toolkit 2842-4 to provide a tool for configuring a UI of a 2D or 3D format.

The web browser module 2850 is a module that performs web-browsing and accesses a web server. The web browser module 2850 may include a web view module to render and view a web page, a download agent module to download, a bookmark module, and a web-kit module, etc.

The service module 2860 is an application module that provides various services. Specifically, the service module 2860 may include various modules such as a navigation service module to provide a map, a current location, a landmark, and route information, a game module, and an advertisement application module.

The main CPU 132 of the controller 130 accesses the storage 160 through the storage interface 135, copies various modules stored in the storage 160 into the RAM 131-2, and performs operations according to operations of the copied modules.

Specifically, the main CPU 132 analyzes output values of the sensors of the sensor 120 using the sensing module 2821, checks a bending area, a bending line, a bending direction, a number of times that bending is performed, a bending angle, a bending speed, a touch area, a number of times that touch is performed, an intensity of touch, a magnitude of pressure, a degree of proximity, and an intensity of user's grip, and, based on a result of the checking, determines whether a user bending gesture is a predetermined gesture or not. When it is determined that the user bending gesture is the predetermined gesture, the main CPU 132 detects information on an operation corresponding to the user manipulation from the database of the storage module 2810. The main CPU 132 drives a module corresponding to the detected information and performs an operation.

For example, when the operation is displaying a graphic user interface (GUI), the main CPU 132 configures a GUI screen using the image compositor module 2842-1 of the presentation module 2840. Also, the main CPU 132 determines a display location of the GUI screen using the coordinate combination module 2842-2 and controls the display 110 to display the GUI screen on the location.

When a user manipulation corresponding to a message receiving operation is performed, the main CPU 132 executes the messaging module 2841, accesses a massage management server, and receives a message stored in a user account. Also, the main CPU 132 configures a screen corresponding to the received message using the presentation module 2840 and displays the screen on the display 110.

When a telephone call is performed, the main CPU 132 may drive the telephony module 2832.

As described above, programs of various structures may be stored in the storage 160 and the controller 130 may perform various operations using various programs stored in the storage 160.

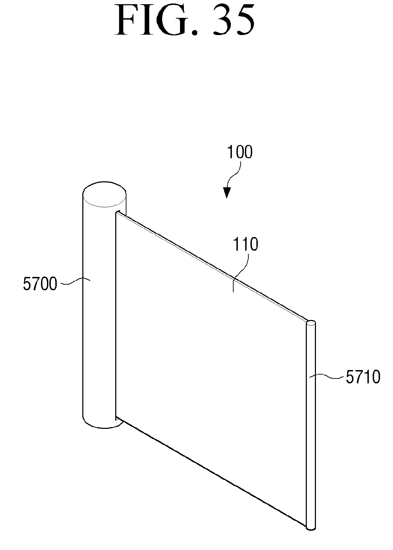

FIG. 35 is a view illustrating an example of a flexible display apparatus which is embedded in a body. Referring to FIG. 35, the flexible display apparatus 100 may include a body 5700, a display 110, and a grip part 5710.

The body 5700 may serve as a kind of a case containing the display 110. When the flexible display apparatus 100 includes various elements as shown in FIG. 35, elements other than the display 110 and some sensors may be mounted in the body 5700. The body 5700 includes a rotary roller for rolling the display 110. Accordingly, when not in use, the display 110 is rolled about the rotary roller and embedded in the body 5700.

When the user holds the grip part 5710 and pulls the display 110, the rotary roller is rotated in the opposite direction to that of the rolling and rolling is released, so that the display 110 comes out to the outside of the body 5700. A stopper may be provided on the rotary roller. Accordingly, when the user pulls the grip part 5710 by more than a predetermined distance, the rotation of the rotary roller is stopped by the stopper and the display 110 may be fixed. Accordingly, the user can execute various functions using the display 110 that is outside of the body 5700. When the user presses a button to release the stopper, the stopper is released and the rotary roller is rotated in a reverse direction. As a result, the display 110 is rolled in the body 5100. The stopper may have a switch shape to stop an operation of a gear to rotate the rotary roller. Because the rotary roller and the stopper may employ a general rolling structure as it is, detailed illustration and explanation thereof are omitted.

The body 5700 includes a power supply 500. The power supply 500 may be implemented by using a battery connector on which a disposable battery is mounted, a secondary cell which can be charged and used multiple times by the user, and a solar cell which generates electricity using solar heat. When the power supply is implemented by using the secondary cell, the user may connect the body 5700 to an external power source through a wire and may charge the power supply 500.

In FIG. 35, the body 5700 has a cylindrical shape. However, the shape of the body 5700 may be quadrangular or other polygonal shape. Also, the display 110 may be implemented in various forms such as enclosing the body 5700, rather than being embedded in the body 5700 and being exposed to the outside by being pulled.

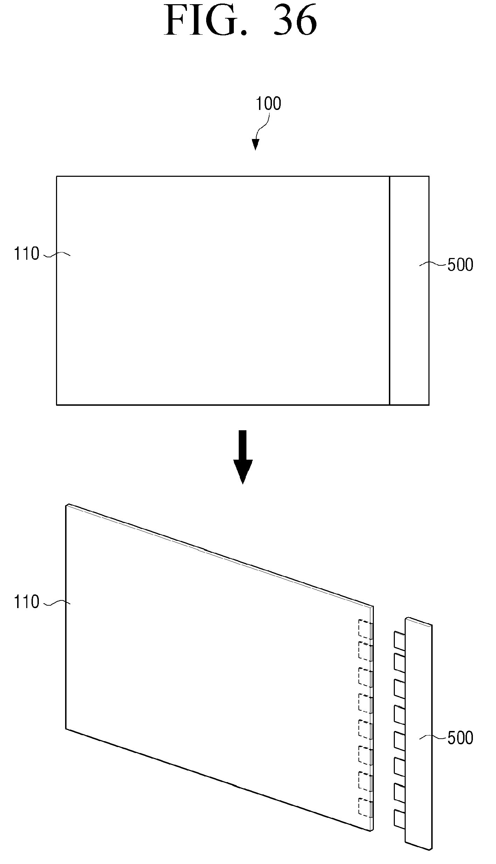

FIG. 36 is a view illustrating a flexible display apparatus in which a power supply 500 is attachable and detachable according to an exemplary embodiment. Referring to FIG. 36, the power supply 500 is provided on one edge of the flexible display apparatus and is attachable and detachable.

The power supply 500 is made of a flexible material and can be bent along with the display 110. Specifically, the power supply 500 includes a cathode collector, a cathode electrode, an electrolyte, an anode electrode, an anode collector, and a sheath covering the aforementioned members.

For example, the collector may be implemented by using an alloy such as TiNi having good elasticity, metal such as copper and aluminum, etc., a conductive material such as metal coated with carbon, carbon, and a carbon fiber, or a conducting polymer, etc. such as polypyrole.

The cathode electrode may be manufactured by a negative electrode material such as metal such as lithium, natrium, zinc, magnesium, cadmium, hydrogen storage alloy, and lead, etc., nonmetal such as carbon, and a high polymer electrode material such as organosulfur.

The anode electrode may be manufactured by a positive electrode material such as sulfur and metal sulfide, lithium transition metal oxide such as LiCoO2, and a polymer electrode material such as SOCl2, MnO2, Ag20, Cl2, NiCl2, and NiOOH etc. The electrolyte may be implemented in a gel form using PEO, PVdF, PMMA, and PVAC.

The sheath may use a general polymer resin. For example, PVC, HDPE, or epoxy, etc. may be used. Besides these, any material that can prevent damage of a thread-type cell and is freely flexible or bendable may be used for the sheath.

Each of the anode electrode and the cathode electrode in the power supply 500 may include a connector to be electrically connected to an external source.

Referring to FIG. 36, the connector protrudes from the power supply 500 and a recess corresponding to a location, a size, and a shape of the connector is formed on the display 110. Accordingly, the power supply 500 is connected with the display 110 as the connector and the recess are connected to each other. The connector of the power supply 500 is connected to a power connection pad (not shown) of the flexible display apparatus 100 to supply power to the flexible display apparatus 100.

The power supply 500 may be attached to or detached from one edge of the flexible display apparatus 100 in FIG. 36. A location and a shape of the power supply 500 may be changed according to a product characteristic. For example, when the flexible display apparatus 100 has a predetermined thickness, the power supply 500 may be mounted on a rear surface of the flexible display apparatus 100.

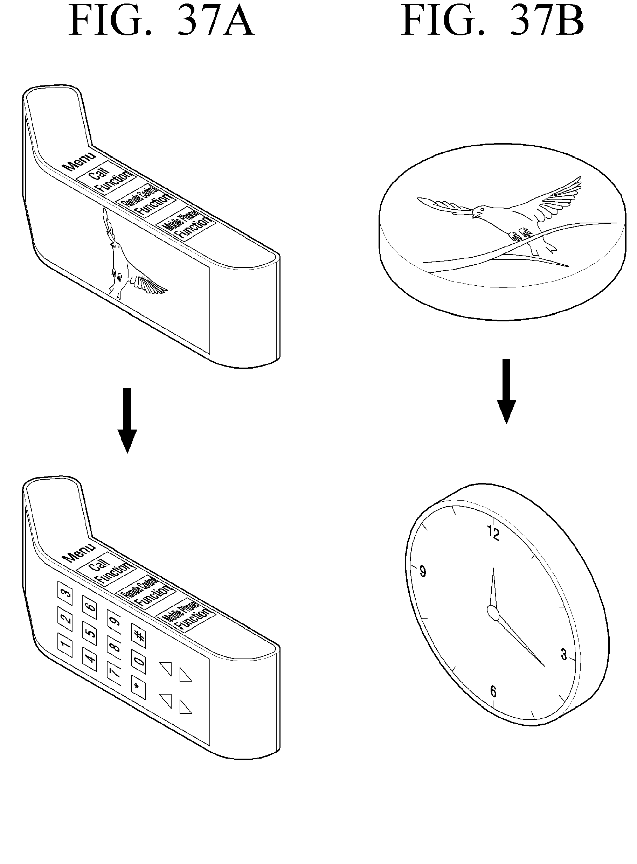

FIGS. 37A through 37B are views illustrating an example of a flexible display apparatus which is implemented according to various exemplary embodiments. As shown in FIGS. 37A and 37B, a flexible display apparatus 100 according to an exemplary embodiment may be implemented in various forms.

FIG. 37A is a view illustrating a flexible display apparatus 100 of a 3-dimensional structure rather than a flat panel structure. Referring to FIG. 37A, a display 110 is disposed on one side of the flexible display apparatus 100, and various hardware such as a button, a speaker, a microphone, and an IR lamp are provided on another side.

A whole outer case or a part of the outer case of the flexible display apparatus 100 shown in FIG. 37A is made of rubber or other polymer resins, and is flexibly bendable. Accordingly, the whole flexible display apparatus 100 or a part of the flexible display apparatus 100 may have flexibility.

The flexible display apparatus 100 may perform a new operation which is different from a previous operation according to a bending manipulation. For example, the flexible display apparatus 100 normally performs a remote control function to control an external apparatus. When a bending gesture is performed in one area, the flexible display apparatus 100 may perform a calling function. When the remote control function is performed, a remote control button may be displayed on the display 110, and, when the calling function is performed, a dial pad may be displayed on the display 110.

FIG. 37B illustrates a circular type flexible display apparatus 100. Accordingly, a visually or functionally different operation may be performed according to a shape in which the flexible display apparatus is placed or folded. For instance, when the flexible display apparatus 100 is placed on a bottom horizontally, photos or other content are displayed, and, when the flexible display apparatus 100 stands on the bottom in an upright position, a clock function is performed. When a center of the flexible display apparatus 100 is bent by 90°, a laptop PC function may be performed. In this case, one of the folded areas displays a soft keyboard and the other area displays a display window.

The control method of the flexible display apparatus, according to the above-described various exemplary embodiments, may be implemented as a program code, stored in various non-transitory computer readable media, and provided to each server or apparatus.

The non-transitory computer readable medium refers to a medium that stores data semi-permanently rather than storing data for a very short time, such as a register, a cache, and a memory, and is readable by an apparatus. Specifically, the above-described various applications or programs may be stored in a non-transitory computer readable medium such as a compact disc (CD), a digital versatile disk (DVD), a hard disk, a Blu-ray disk, a universal serial bus (USB), a memory card, and a read only memory (ROM), and may be provided.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A flexible display apparatus comprising:
a display configured to display a screen;
a sensor configured to sense bending of the flexible display apparatus; and
a controller configured to perform an operation corresponding to a twist bending in response to the sensed bending being the twist bending,
wherein the twist bending is a bending in which two bending lines are formed in opposing bending directions and meet at a certain side of the display.

2. The flexible display apparatus as claimed in claim 1, wherein the controller is configured to control the display to deform the displayed screen into a shape corresponding to the twist bending.

3. The flexible display apparatus as claimed in anyone of claims 1 or 2, wherein, when a certain area of the display is selected by a user manipulation, the controller is configured to control the display to deform a screen displayed on the selected certain area into a shape corresponding to the twist bending.

4. The flexible display apparatus as claimed in anyone of claims 1 to 3, wherein, when a solid shape object is displayed on the screen, the controller is configured to control the display to deform the displayed solid shape object to a shape corresponding to the twist bending.

5. The flexible display apparatus as claimed in anyone of claims 1 to 4, wherein, when a solid shape object is displayed on the screen, the controller is configured to control the display to rotate the displayed solid shape object in a direction corresponding to the twist bending.

6. The flexible display apparatus as claimed in any one of claims 2 to 5, wherein the controller is configured to control the display to change the displayed screen according to a least one of a location of a bending line which is formed by the twist bending, a direction of the twist bending, an angle of the twist bending, a number of times that the twist bending is performed, and a twist bending holding time.

7. The flexible display apparatus as claimed in any one of claims 1 to 6, wherein, when a solid shape object is displayed on the screen and the sensed bending is normal bending, the controller is configured to control the display to rotate the displayed solid shape object in a direction corresponding to the normal bending.

8. The flexible display apparatus as claimed in any one of claims 1 to 7, wherein the controller controls the rotating of the solid shape object, based on at least one of a rotation axis corresponding to a bending line of the sensed normal bending, a rotation angle corresponding to a bending angle of the sensed normal bending, a rotation speed corresponding to a bending speed of the sensed normal bending, and a rotation direction corresponding to a bending direction of the sensed normal bending.

9. The flexible display apparatus as claimed in any one of claims 1 to 8, further comprising:
a camera configured to photograph an image; and
a communicator configured to receive augmented reality information corresponding to the photographed image,
wherein, the controller is configured to display an augmented reality screen corresponding to the received augmented reality information, and the controller is configured to control the display to rotate the displayed augmented reality screen in a direction corresponding to the sensed bending.

10. The flexible display apparatus as claimed in any one of claims 1 to 9, wherein, when the displayed screen is a color screen, the controller is configured to control the display to change the displayed color screen to a black and white screen according to the sensed twist bending.

11. The flexible display apparatus as claimed in any one of claims 1 to 10, wherein, when the displayed screen comprises a folder icon, the controller is configured to control the display to open and close of the folder icon according to the sensed twist bending.

12. The flexible display apparatus as claimed in any one of claims 1 to 11, wherein the sensor senses a user grip on the flexible display apparatus,
wherein, when the twist bending is performed in a state in which the user grip is sensed from predetermined areas of opposite sides or diagonally opposite vertices, the controller is configured to determine that the twist bending is whole twist bending,
wherein, when the twist bending is performed in a state in which the user grip is sensed from predetermined areas of one side or vertices located on one side, the controller is configured to determine that the twist bending is partial twist bending.

13. The flexible display apparatus as claimed in any one of claims 1 to 12, wherein, when the sensed twist bending is the whole twist bending, the controller is configured to change a currently displayed application execution screen to another application execution screen.

14. The flexible display apparatus as claimed in any one of claims 1 to 13, wherein, when the sensed twist bending is the partial twist bending, the controller is configured to perform a function which is provided by a currently displayed application.

15. A method for controlling of a flexible display apparatus which comprises a display configured to display a screen, the method comprising:
sensing a bending of the flexible display apparatus; and
performing an operation corresponding to a twist bending in response to the sensed bending being the twist bending,
wherein twist bending is a bending in which two bending lines are formed in opposing bending directions and meet a certain side of the display.
